(19) Europäisches Patentamt
European Patent Office
Office européen des brevets

(11) **EP 4 145 357 A1**

(12) **EUROPEAN PATENT APPLICATION**

(43) Date of publication:
**08.03.2023 Bulletin 2023/10**

(21) Application number: **22188259.0**

(22) Date of filing: **02.08.2022**

(51) International Patent Classification (IPC):
*G06N 5/02* (2006.01)   *G06N 20/20* (2019.01)
*G06N 5/00* (2006.01)   *G06N 5/04* (2006.01)
*G06F 8/40* (2018.01)   *G06F 8/41* (2018.01)
*G06F 8/72* (2018.01)

(52) Cooperative Patent Classification (CPC):
**G06N 5/022; G06F 8/433; G06F 8/72; G06N 5/01;
G06N 20/20**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.09.2021   US 202163260909 P
31.03.2022   US 202217657619**

(71) Applicant: **FUJITSU LIMITED
Kawasaki-shi, Kanagawa 211-8588 (JP)**

(72) Inventors:
• **Saha, Ripon K.
Pleasanton, CA, 94588 (US)**
• **Prasad, Mukul
San Jose, CA (US)**

(74) Representative: **Hoffmann Eitle
Patent- und Rechtsanwälte PartmbB
Arabellastraße 30
81925 München (DE)**

(54)   **AUTOMATIC DENOISING OF MACHINE LEARNING PROJECTS**

(57)    According to an aspect of an embodiment, operations may include receiving an ML project including a data-frame and an ML pipeline including a plurality of code statements associated with a plurality of features corresponding to the ML project. The operations may further include determining one or more atomic steps corresponding to the ML pipeline to determine an atomized ML pipeline. The operations may further include instrumenting the atomized ML pipeline to determine an instrumented ML pipeline including one or more operations corresponding to the ML project. The operations may further include executing the instrumented ML pipeline to capture one or more data-frame snapshots based on each of the one or more operations. The operations may further include constructing a feature provenance graph (FPG). The operations may further include identifying one or more discarded features, from the plurality of features corresponding to the ML project, based on the constructed FPG.

FIG. 1

EP 4 145 357 A1

**Description**

CROSS-REFERENCE TO RELATED APPLICATIONS/INCORPORATION BY REFERENCE

This application claims priority to U.S. Provisional Patent Application Ser. No. 63/260,909 filed on September 3, 2021, titled, "DE-NOISING PIPELINE DATA USING DYNAMIC DATA FLOW ANALYSIS FOR ACCURATE META-LEARNING," the entire content of which is hereby incorporated herein by reference.

FIELD

The embodiments discussed in the present disclosure are related to automatic denoising of machine learning projects.

BACKGROUND

Advancements in the field of artificial intelligence (AI) and machine learning (ML) have led to application of AI/ML algorithms in a variety of domains. Typically, ML pipelines may be created manually by data scientists for a given dataset. The manual creation of ML pipelines may be a time-consuming task, which may require a significant amount of effort of expert users, such as, the data scientists. Moreover, human data-scientists may often discard several features of an input dataset of a given ML project. Recently, certain techniques for automatic generation of ML pipelines for datasets have been developed. Typically, the deleted features may constitute a source of noise for learning for the automatic generation of the ML pipeline. However, there may be multiple reasons and mechanics to prune features. Thus, simple analyses or heuristics may not be adequate to identify the discarded features so as to improve the automatic generation of ML pipelines.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

SUMMARY

According to an aspect of an embodiment, operations may include receiving a machine learning (ML) project including a data-frame and an ML pipeline including a plurality of code statements associated with a plurality of features corresponding to the received ML project. The operations may further include determining one or more atomic steps corresponding to the ML pipeline to determine an atomized ML pipeline. The operations may further include instrumenting the atomized ML pipeline to determine an instrumented ML pipeline including one or more operations corresponding to the received ML project. The operations may further include executing the instrumented ML pipeline to capture one or more data-frame snapshots based on each of the one or more operations. The operations may further include constructing a feature provenance graph (FPG) based on the ML pipeline and the captured one or more data-frame snapshots. The operations may further include identifying one or more discarded features, from the plurality of features corresponding to the received ML project, based on the constructed FPG.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

BRIEF DESCRIPTION OF THE DRAWINGS

Example embodiments will be described and explained with additional specificity and detail through the use of the accompanying drawings in which:

FIG. 1 is a diagram that illustrates an example environment related to automatic denoising of machine learning projects;
FIG. 2 is a block diagram of a system for automatic denoising of machine learning projects;
FIG. 3 is a diagram that illustrates an execution pipeline for automatic denoising of machine learning projects;
FIG. 4A is a diagram that illustrates an exemplary scenario of an exemplary ML pipeline corresponding to an exemplary ML project;
FIG. 4B is a diagram that illustrates an exemplary feature provenance graph (FPG) constructed based on the ML pipeline of FIG. 4A;

FIG. 5 is a diagram that illustrates a flowchart of an exemplary method for automatic denoising of machine learning projects;

FIGs. 6A and 6B are diagrams that collectively illustrate a flowchart of an exemplary method for construction of the feature provenance graph (FPG);

FIG. 7 is a diagram that illustrates a flowchart of an exemplary method for identification of one or more discarded features from the plurality of features corresponding to the ML project based on the constructed FPG;

FIG. 8 is a diagram that illustrates a flowchart of an exemplary method to determine explicit feature mapping of an ML pipeline;

FIG. 9 is a diagram that illustrates an exemplary scenario of an exemplary ML pipeline corresponding to an exemplary ML project;

FIG. 10 is a diagram that illustrates a flowchart of an exemplary method to determine implicit feature mapping of an ML pipeline; and

FIG. 11 is a diagram that illustrates an exemplary scenario for extraction of second mappings;

all according to at least one embodiment described in the present disclosure.

DESCRIPTION OF EMBODIMENTS

Some embodiments of the present disclosure relate to systems and methods for automatic denoising of machine learning projects. In the present disclosure, a machine learning (ML) project, from a plurality of ML projects stored in an ML corpus database, may be received. The ML project may include a data-frame and an ML project. The ML pipeline may include a plurality of code statements associated with a plurality of features corresponding to the received ML project. Further, one or more atomic steps corresponding to the ML pipeline may be determined to determine an atomized ML pipeline. Thereafter, the atomized ML pipeline may be instrumented to determine an instrumented ML pipeline including one or more operations corresponding to the ML project. Further, the instrumented ML pipeline may be executed to capture one or more data-frame snapshots based on each of the one or more operations. A feature provenance graph (FPG) may be constructed based on the ML pipeline and the captured one or more data-frame snapshots. Thereafter, one or more discarded features, from the plurality of features corresponding to the received ML project, may be identified based on the constructed FPG.

According to one or more embodiments of the present disclosure, the technological field of artificial intelligence (AI)/ machine learning (ML) may be improved by configuring a computing system, such as, an electronic device, in a manner that the computing system may be able to automatically denoise an ML project. The computing system may receive a machine learning (ML) project from a plurality of ML projects stored in an ML corpus database. The ML project may include a data-frame and an ML project. The ML pipeline may include a plurality of code statements associated with a plurality of features corresponding to the received ML project. The computing system may further determine one or more atomic steps corresponding to the ML pipeline to determine an atomized ML pipeline. Thereafter, the computing system may instrument the atomized ML pipeline to determine an instrumented ML pipeline including one or more operations corresponding to the ML project. The computing system may further execute the instrumented ML pipeline to capture one or more data-frame snapshots based on each of the one or more operations. Further, the computing system may construct a feature provenance graph (FPG) based on the ML pipeline and the captured one or more data-frame snapshots. Thereafter, the computing system may identify one or more discarded features, from the plurality of features corresponding to the received ML project, based on the constructed FPG.

Traditional methods for ML pipeline generation may require significant manual effort and time of expert users, such as, data scientists. Human data-scientists may often discard several features of an input dataset (i.e., a data-frame of an ML project). Recently, certain techniques for automatic generation of ML pipelines for datasets have been developed. Typically, the deleted features may constitute a source of noise for learning for the automatic generation of the ML pipeline. However, there may be multiple reasons and mechanics to prune features. Thus, simple analyses or heuristics may not be adequate to identify the discarded features so as to improve the automatic generation of ML pipelines.

The electronic device of the present disclosure may automatically denoise an ML project. The electronic device of the present disclosure may employ a dynamic dataflow analysis of ML pipelines to accurately identify data features that may not be used or may be effectively discarded by an ML pipeline of the ML project. The disclosed electronic device may systematically track the execution of the ML pipeline operation-by-operation and may automatically record addition, removal, or modification of data features in a data-frame, and may thereby clearly identify the features that may be used by the ML pipeline. Further, the disclosed electronic device may label the ML pipeline of the ML project with discarded features to obtain a cleaner ML pipeline and data-frame, which may be used for automatic generation of ML pipelines with a higher accuracy. The accurate identification of discarded features may also result in generation of higher quality meta-learning models from the ML project, based on the obtained cleaner ML pipelines and data-frames.

Embodiments of the present disclosure are explained with reference to the accompanying drawings.

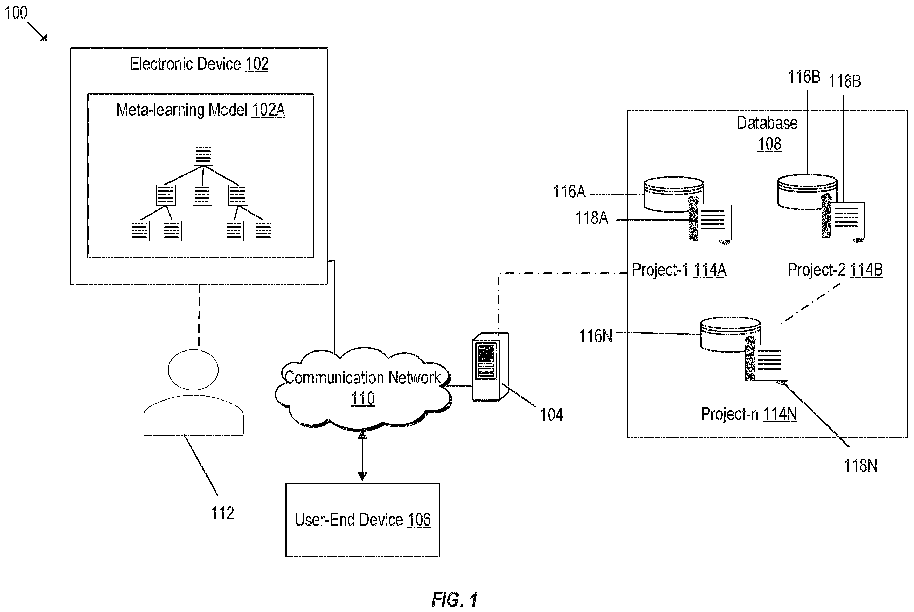

FIG. 1 is a diagram that illustrates an example environment related to automatic denoising of machine learning projects, according to at least one embodiment described in the present disclosure. With reference to FIG. 1, there is shown an environment 100. The environment 100 may include an electronic device 102, a server 104, a user-end device 106, a database 108, and a communication network 110. The electronic device 102 and the server 104, and the user-end device 106 may be communicatively coupled to one another, via the communication network 110. The electronic device 102 may comprise a meta-learning model 102A. In FIG. 1, there is further shown a user 112, who may be associated with or operate the electronic device 102 or the user-end device 106. The database 108 may include plurality of ML projects. For example, the plurality of the ML project may include "n" number of ML projects such as, an ML project-1 114A, an ML project-2 114B, ...and an ML project-n 114N. Each of the plurality of ML projects may include a dataset (also referred as a data-frame) and a set of ML pipelines applicable on the dataset. For example, the ML project-1 114A may include a data-frame 116A and an ML pipeline 118A. Further, the ML project-2 114B may include a data-frame 116B and an ML pipeline 118B. Similarly, the ML project-n 114N may include a data-frame 116N and an ML pipeline 118N.

The "n" number of ML projects shown in FIG. 1 is presented merely as an example. The plurality of the ML project may include only two ML projects or more than two ML projects, without deviation from the scope of the disclosure. For the sake of brevity, only "n" ML projects have been shown in FIG. 1. However, in some embodiments, there may be more than "n" ML projects, without limiting the scope of the disclosure.

The electronic device 102 may include suitable logic, circuitry, and interfaces that may be configured to receive an ML project (e.g., the ML project-1114A) including a data-frame (e.g., the data-frame-1 116A) and an ML pipeline (e.g., the ML pipeline 118A). The ML pipeline may include a plurality of code statements associated with a plurality of features corresponding to the received ML project. The electronic device 102 may be further configured to determine one or more atomic steps corresponding to the ML pipeline to determine an atomized ML pipeline. The electronic device 102 may be further configured to instrument the atomized ML pipeline to determine an instrumented ML pipeline including one or more operations corresponding to the received ML project. The electronic device 102 may be further configured to execute the instrumented ML pipeline to capture one or more data-frame snapshots based on each of the one or more operations. The electronic device 102 may be further configured to construct a feature provenance graph (FPG) based on the ML pipeline and the captured one or more data-frame snapshots. The electronic device 102 may be further configured to identify one or more discarded features, from the plurality of features corresponding to the received ML project, based on the constructed FPG. Examples of the electronic device 102 may include, but are not limited to, a computing device, a smartphone, a cellular phone, a mobile phone, a gaming device, a mainframe machine, a server, a computer workstation, a data-analytics machine, and/or a consumer electronic (CE) device.

The meta-learning model 102A may include suitable logic, circuitry, interfaces, and/or code that may be configured to use meta-learning algorithms to generate a predictive model based on previously trained models (e.g., ML pipelines) and data-frames or features. The meta-learning model 102A may learn from the output of the other learning algorithms. For example, for prediction, the meta-learning model 102A may learn based on the output of the other learning algorithms. In another example, the meta-learning model 102A may be fed with an parameters of other ML models (e.g., a neural network model, a polynomial regression model, a random forest classifier, a logistic regression model, or an ensemble learning model) and data-frames/features corresponding to each ML algorithm. The meta-learning model 102A may learn meta-features and meta-heuristics based on the data-frames/features and parameters associated with each of the input ML models. In an example, once the meta-learning model 102A is trained, the meta-learning model 102A may be used to generate ML pipelines based on input features or data-frames associated with an ML project.

The server 104 may include suitable logic, circuitry, and interfaces, and/or code that may be configured to receive the ML project including the data-frame and the ML pipeline. The ML pipeline may include the plurality of code statements associated with the plurality of features corresponding to the ML project. The server 104 may be further configured to determine one or more atomic steps corresponding to the received ML pipeline to determine the atomized ML pipeline. The server 104 may be further configured to instrument the atomized ML pipeline to determine the instrumented ML pipeline including one or more operations corresponding to the received ML project. The server 104 may be further configured to execute the instrumented ML pipeline to capture one or more data-frame snapshots based on each of the one or more operations. The server 104 may be further configured to construct the feature provenance graph (FPG) based on the received ML pipeline and the captured one or more data-frame snapshots. The server 104 may be further configured to identify one or more discarded features, from the plurality of features corresponding to the received ML project, based on the constructed FPG. The server 104 may be implemented as a cloud server and may execute operations through web applications, cloud applications, HTTP requests, repository operations, file transfer, and the like. Other example implementations of the server 104 may include, but are not limited to, a database server, a file server, a web server, a media server, an application server, a mainframe server, a data-analytics server, or a cloud computing server.

In at least one embodiment, the server 104 may be implemented as a plurality of distributed cloud-based resources by use of several technologies that are well known to those ordinarily skilled in the art. A person with ordinary skill in the art will understand that the scope of the disclosure may not be limited to the implementation of the server 104 and the electronic device 102 as two separate entities. In certain embodiments, the functionalities of the server 104 can be incorporated in its entirety or at least partially in the electronic device 102, without a departure from the scope of the disclosure.

The user-end device 106 may comprise suitable logic, circuitry, interfaces, and/or code that may be configured to store a real-time application where the automatic denoising of machine learning pipelines may be performed. In some embodiments, the user-end device 106 may receive a first user-input from a user (e.g., a data-scientist, such as, the user 112) and generate the set of ML pipelines based on the received first user-input. In another embodiment, the user-end device 106 may receive one or more second user-inputs from a user (e.g., a data-scientist, such as, the user 112) and generate the set of ML pipelines associated with each of the plurality of ML projects based on the one or more second user-inputs. In addition, the user-end device 106 may receive a plurality of datasets (or data-frames) associated with the plurality of projects from various sources such as, online dataset repositories, code repositories, and online open-source projects. The user-end device 106 may be configured to upload the set of ML pipelines and the plurality of datasets (i.e., data-frames) associated with the plurality of projects to the server 104. The uploaded plurality of ML pipelines and the plurality of datasets may be stored in an ML corpus database in the database 108 as the plurality of ML projects. In an embodiment, the user-end device 106 may receive another user input associated with an identification of one or more features that may be deleted from each of the plurality of ML projects. Examples of the user-end device 106 may include, but are not limited to, a mobile device, a desktop computer, a laptop, a computer workstation, a computing device, a mainframe machine, a data-analytics system, a server, such as a cloud server, and a group of servers.

The database 108 may include suitable logic, interfaces, and/or code that may be configured to store the plurality of ML projects, wherein each ML project may include a data-frame and a set of ML pipelines applicable on the data-frame for each of the plurality of ML projects. The database 108 may be derived from data off a relational or non-relational database, or a set of comma-separated values (csv) files in conventional or big-data storage. The database 108 may be stored or cached on a device, such as a server (e.g., the server 104) or the electronic device 102. The device storing the database 108 may be configured to receive a query for the machine learning (ML) project from the plurality of ML projects from the electronic device 102. In response, the device of the database 108 may be configured to retrieve and provide the queried ML project, including the associated data-frame and the associated set of ML pipelines to the electronic device 102 based on the received query.

In some embodiments, the database 108 may be hosted on a plurality of servers stored at same or different locations. The operations of the database 108 may be executed using hardware including a processor, a microprocessor (e.g., to perform or control performance of one or more operations), a field-programmable gate array (FPGA), or an application-specific integrated circuit (ASIC). In some other instances, the database 108 may be implemented using software.

The communication network 110 may include a communication medium through which the electronic device 102, the server 104, and the user-end device 106 may communicate with one another. The communication network 110 may be one of a wired connection or a wireless connection. Examples of the communication network 110 may include, but are not limited to, the Internet, a cloud network, Cellular or Wireless Mobile Network (such as Long-Term Evolution and 5G New Radio), a Wireless Fidelity (Wi-Fi) network, a Personal Area Network (PAN), a Local Area Network (LAN), or a Metropolitan Area Network (MAN). Various devices in the environment 100 may be configured to connect to the communication network 110 in accordance with various wired and wireless communication protocols. Examples of such wired and wireless communication protocols may include, but are not limited to, at least one of a Transmission Control Protocol and Internet Protocol (TCP/IP), User Datagram Protocol (UDP), Hypertext Transfer Protocol (HTTP), File Transfer Protocol (FTP), Zig Bee, EDGE, IEEE 802.11, light fidelity (Li-Fi), 802.16, IEEE 802.11s, IEEE 802.11g, multi-hop communication, wireless access point (AP), device to device communication, cellular communication protocols, and Bluetooth (BT) communication protocols.

In operation, the electronic device 102 may be configured to receive an ML project (e.g., the ML project-1 114A) including a data-frame (e.g., the data-frame 116A) and an ML pipeline (e.g., the ML pipeline 118A). The ML pipeline may include a plurality of code statements associated with a plurality of features corresponding to the received ML project. The ML project may help applications to perform tasks such as, prediction, regression, and the like without being programmed to do so. The data-frame may include historical data corresponding to a specific ML task defined on that data-frame. The ML pipeline or a script or a program be a sequence of operations to train an ML model for a specific ML task and use the trained model for predictions on new instances of data. The plurality of code statements may correspond to the sequence of operations. It may be appreciated that the plurality of features may be independent variables provided as input to the ML model for training. Each of the plurality of features may correspond to a column of the data-frame, which may include a tabular dataset.

The electronic device 102 may be configured to determine one or more atomic steps corresponding to the ML pipeline (e.g., the ML pipeline 118A) to determine an atomized ML pipeline. It may be appreciated that each atomic step may perform one operation. The received ML pipeline may perform one or more atomic steps such as, assignment of a variable, renaming of a feature, deletion of a feature, and the like. The electronic device 102 may convert the ML pipeline to the one or more atomic statements to determine the atomized ML pipeline.

The electronic device 102 may be configured to instrument the atomized ML pipeline to determine an instrumented ML pipeline including one or more operations corresponding to the received ML project. To instrument the atomized ML pipeline, one or more code statements may be inserted to the atomized ML pipeline to generate a log of events, warnings, data-frame used, and the like. Herein, the instrumented ML pipeline may include one or more operations corresponding to the received ML project. Thus, the atomized ML pipeline may be instrumented based on an injection certain extra code lines after each of the one or more atomic steps so that a current state of the data-frame may be collected as a data-frame snapshot.

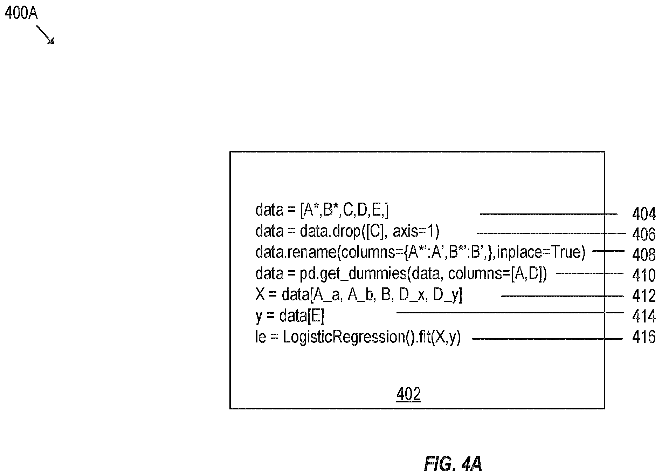

The electronic device 102 may be configured to execute the instrumented ML pipeline to capture one or more data-frame snapshots based on each of the one or more operations. Herein, the instrumented ML pipeline may be run to generate a log of actions, such as, an insertion of a feature, a renaming of a feature, a deletion of a feature, an assignment of values, and the like, may be performed in each of the one or more operations. The one or more data-frame snapshots may be obtained based on a capture of a snapshot of the generated log of actions. For example, a feature 'A' may be renamed to 'A*' using a rename operation. Herein, the data-frame snapshot of the corresponding rename operation. Details of the one or more operations are further provided, for example, in FIG. 4A.

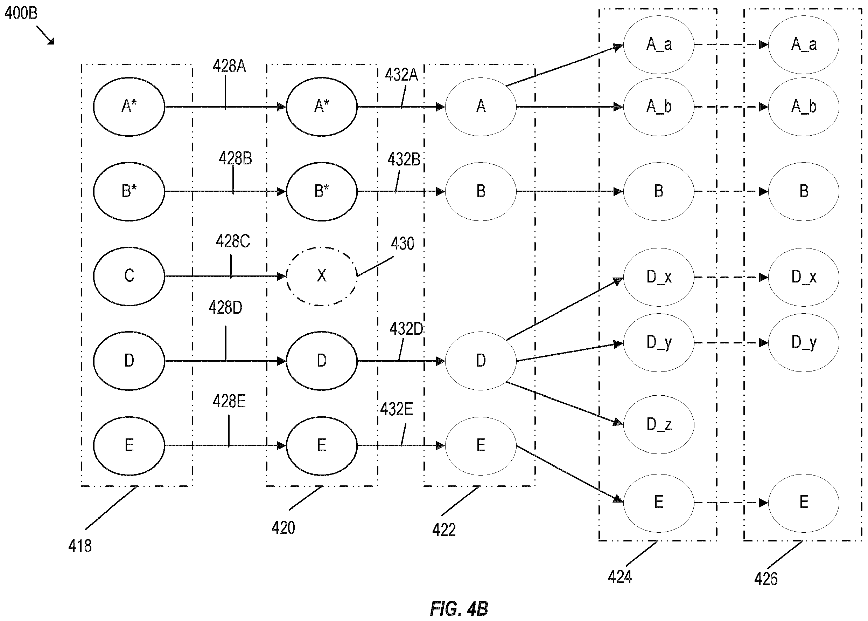

The electronic device 102 may be configured to construct the feature provenance graph (FPG) based on the ML pipeline and the captured one or more data-frame snapshots. The FPG may represent an evolution of each feature throughout various feature engineering steps associated with the received ML project as a directed acyclic graph (DAG). Herein, the DAG may include a plurality of nodes and directed edges. Each node may be associated with a feature and each edge may denote a relationship between feature nomenclature at different steps of the feature engineering process associated with the received ML project. In order to construct the FPG, the FPG may be initiated with a first layer including one node for each of the plurality of features corresponding to the received ML project. Thereafter, based on the captured one or more data-frame snapshots, a node for each of the plurality of features corresponding to the received ML project may added, deleted, or modified in each layer. For example, if the feature 'A' is renamed to 'A*' in a first operation, then based on the data-frame snapshot corresponding to the first operation the node corresponding to the feature 'A' in a first layer of the FPG may be assigned as 'A*' in a second layer of the FPG. Thus, the data-frame snapshot corresponding to each of the one or more operations may be analyzed to construct the FPG. In an embodiment, the FPG may represent how each the plurality of features corresponding to the received ML project may be modified, deleted, or renamed in the ML pipeline. Details of the FPG are provided, for example, in FIG. 4B.

The electronic device 102 may be configured to identify one or more discarded features, from the plurality of features corresponding to the received ML project, based on the constructed FPG. Herein, the discarded features may correspond to features of the plurality of features that are deleted or ignored in the received ML project. In an example, the ML project may be associated with an ML task to predict a price per night of a rental accommodation at a location. Herein, the plurality of features of the ML project may include "neighbourhood_group", "minimum_nights", "longitude", "calculated_host_listings_count", "host_id", "id", "name", "host_name", "last_review", "number_of_reviews", "availability_365", "neighbourhood", "latitude", "room_type", "reviews_per_month", and "price". The ML pipeline corresponding to the ML project may be:

```
raw_data = pd.read_csv("../../input/rental_accomodations/listings.csv")
data = raw_data.copy()
new_data = data.drop(['last_review', 'reviews_per_month'], axis=1):
# drop irrelevant features
model_data = new_data.copy()
model_data = model_data.drop(['id','name','host_name','host_id'], axis=1)
```

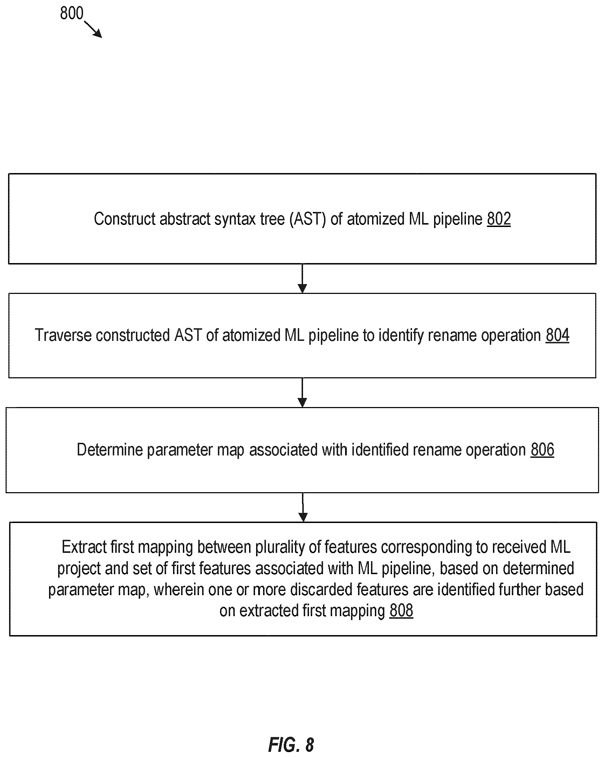

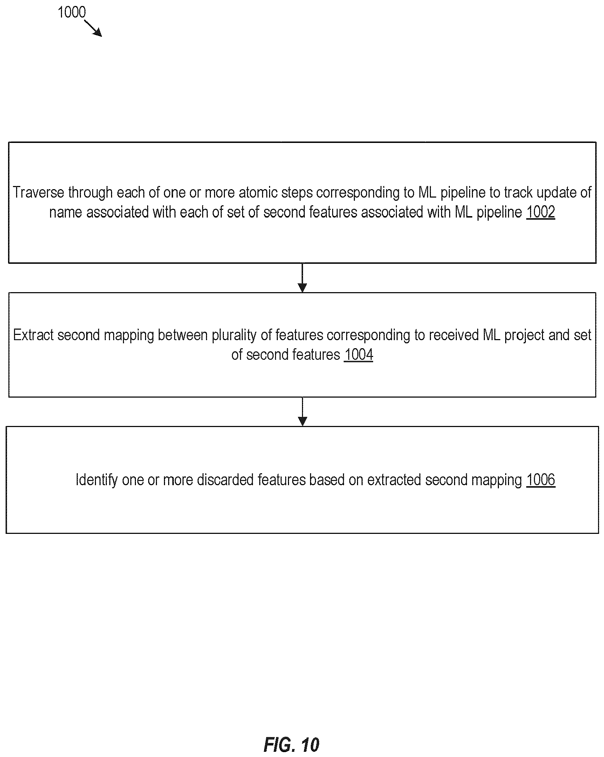

Based on the above ML pipeline, it may be observed that features such as, "id", "name", "host_name", "host_id" are discarded. Hence, the nodes in the second layer of FPG corresponding to such features may be eliminated. Thus, , features that are discarded may be identified from the FPG, based on features corresponding to nodes may not be present in a final layer of the FPG. Details of the one or more discarded features are further provided, for example, in FIGs. 8 and 10.

The electronic device 102 of the present disclosure may identify the one or more discarded features and may provide cleaner ML pipelines and data-frames associated with ML projects for learning-based automatic machine learning (AutoML) techniques. The cleaner ML pipelines and data-frames, which may be generated based on the identification of the one or more discarded features, may lead to an increased accuracy of the AutoML techniques. For example, the meta-learning model 102A may be trained and used for AutoML tasks. The meta-learning model 102A may learn meta-features and meta-heuristics based on the data-frames/features (including the one or more discarded features) and ML pipelines associated with the plurality of ML projects. As the one or more discarded features may include certain features that may be relevant or may be accidently deleted during a data pre-processing stage associated with an ML project, a controlled inclusion or removal of such initially discarded features may lead to better feature engineering outcomes, thereby leading to an improvement of an overall quality of the meta-learning model 102A. Once the meta-learning model 102A may be trained, the meta-learning model 102A may be used to generate ML pipelines based on input features or data-frames associated with an ML project.

Modifications, additions, or omissions may be made to FIG. 1 without departing from the scope of the present disclosure. For example, the environment 100 may include more or fewer elements than those illustrated and described in the present disclosure. For instance, in some embodiments, the environment 100 may include the electronic device 102 but not the database 108. In addition, in some embodiments, the functionality of each of the database 108 and the server 104 may be incorporated into the electronic device 102, without a deviation from the scope of the disclosure.

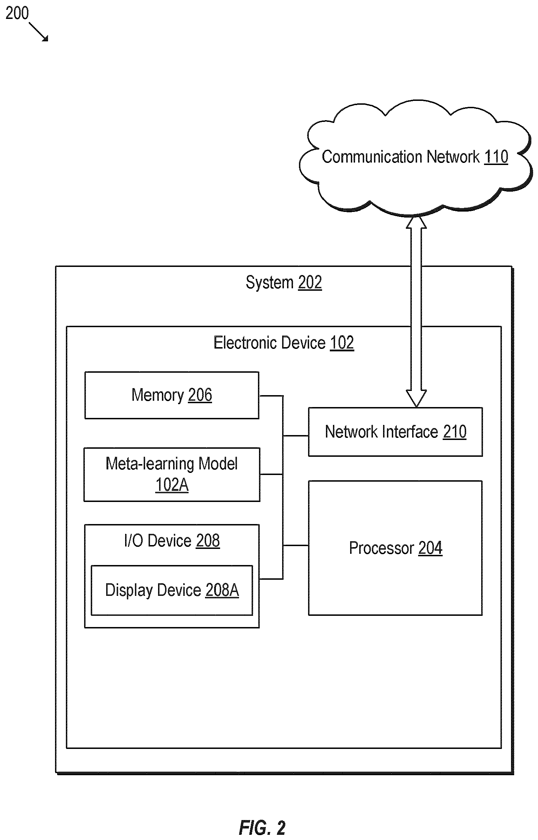

FIG. 2 is a block diagram of a system for automatic denoising of machine learning projects, in accordance with at least one embodiment described in the present disclosure. FIG. 2 is explained in conjunction with elements from FIG. 1. With reference to FIG. 2, there is shown a block diagram 200 of a system 202 including the electronic device 102. The electronic device 102 may include a processor 204, a memory 206, the meta-learning model 102A, an input/output (I/O) device 208 (comprising a display device 208A), and a network interface 210.

The processor 204 may include suitable logic, circuitry, and interfaces that may be configured to execute a set of instructions stored in the memory 206. The processor 204 may be configured to execute program instructions associated with different operations to be executed by the electronic device 102. For example, some of the operations may include receiving the ML project. The operations may further include determining one or more atomic steps corresponding to the ML pipeline to determine the atomized ML pipeline. The operations may further include instrumenting the atomized ML pipeline to determine the instrumented ML pipeline including one or more operations corresponding to the received ML project. The operations may further include executing the instrumented ML pipeline to capture one or more data-frame snapshots based on each of the one or more operations. The operations may further include constructing the feature provenance graph (FPG) based on the received ML pipeline and the captured one or more data-frame snapshots. The operations may further include identifying one or more discarded features, from the plurality of features corresponding to the received ML project, based on the constructed FPG. Examples of the processor technologies may include, but are not limited to, a Central Processing Unit (CPU), X86-based processor, a Reduced Instruction Set Computing (RISC) processor, an Application-Specific Integrated Circuit (ASIC) processor, a Complex Instruction Set Computing (CISC) processor, a Graphical Processing Unit (GPU), and other processors.

Although illustrated as a single processor in FIG. 2, the processor 204 may include any number of processors configured to, individually or collectively, perform or direct performance of any number of operations of the electronic device 102, as described in the present disclosure. Additionally, one or more of the processors may be present on one or more different electronic devices, such as different servers. In some embodiments, the processor 204 may be configured to interpret and/or execute program instructions and/or process data stored in the memory 206. After the program instructions are loaded into the memory 206, the processor 204 may execute the program instructions. Some of the examples of the processor 204 may be a Graphics Processing Unit (GPU), a Central Processing Unit (CPU), a Reduced Instruction Set Computer (RISC) processor, an ASIC processor, a Complex Instruction Set Computer (CISC) processor, a co-processor, and/or a combination thereof.

The memory 206 may include suitable logic, circuitry, and interfaces that may be configured to store the one or more instructions to be executed by the processor 204. The one or more instructions stored in the memory 206 may be executed by the processor 204 to perform the different operations of the processor 204 (and the electronic device 102). The memory 206 may be configured to store the received ML project including the associated data-frame and the associated ML pipeline. The memory 206 may be further configured to store the atomized ML pipeline, the instrumented ML pipeline, the captured one or more data-frame snapshots, the constructed FPG, and the identified one or more discarded features. Examples of implementation of the memory may include, but are not limited to, Random Access Memory (RAM), Read Only Memory (ROM), Electrically Erasable Programmable Read-Only Memory (EEPROM), Hard Disk Drive (HDD), a Solid-State Drive (SSD), a CPU cache, and/or a Secure Digital (SD) card.

The I/O device 208 may include suitable logic, circuitry, and interfaces that may be configured to receive an input from the user 112 and provide an output based on the received input. For example, the I/O device 208 may receive from the user 112, a user-input associated with the generation of an ML pipeline, a data-frame associated with the ML pipeline, or an ML project. Further, the I/O device 208 may receive another user-input associated with a selection or deletion of features associated with the ML project. Also, the I/O device 208 may render one or more of: the atomized ML pipeline, the instrumented ML pipeline, the captured one or more data-frame snapshots, the constructed FPG, the identified one or more discarded features, and/or a predicted output of the trained meta-learning model 102A. The I/O device 208 which may include various input and output devices, may be configured to communicate with the processor 204. Examples of the I/O device 208 may include, but are not limited to, a touch screen, a keyboard, a mouse, a joystick, a microphone, a display device (such as, the display device 208A), and a speaker.

The display device 208A may include suitable logic, circuitry, and interfaces that may be configured to display the identified one or more discarded features, from the plurality of features corresponding to the ML project. The display device 208A may also display a predicted output of the meta-learning model 102A. The display device 208A may be a touch screen, which may enable a user (e.g., the user 112) to provide a user-input via the display device 208A. The touch screen may be at least one of a resistive touch screen, a capacitive touch screen, or a thermal touch screen. The display device 208A may be realized through several known technologies such as, but not limited to, at least one of a Liquid Crystal Display (LCD) display, a Light Emitting Diode (LED) display, a plasma display, or an Organic LED (OLED) display technology, or other display devices. In accordance with an embodiment, the display device 208A may refer to a display screen of a head mounted device (HMD), a smart-glass device, a see-through display, a projection-based display, an electro-chromic display, or a transparent display.

The network interface 210 may include suitable logic, circuitry, and interfaces that may be configured to facilitate communication between the processor 204, the server 104, and the user-end device 106 (or any other device in the environment 100), via the communication network 110. The network interface 210 may be implemented by use of various known technologies to support wired or wireless communication of the electronic device 102 with the communication network 110. The network interface 210 may include, but is not limited to, an antenna, a radio frequency (RF) transceiver, one or more amplifiers, a tuner, one or more oscillators, a digital signal processor, a coder-decoder (CODEC) chipset, a subscriber identity module (SIM) card, or a local buffer circuitry. The network interface 210 may be configured to communicate via wireless communication with networks, such as the Internet, an Intranet or a wireless network, such as a cellular telephone network, a wireless local area network (LAN), and a metropolitan area network (MAN). The wireless communication may be configured to use one or more of a plurality of communication standards, protocols and technologies, such as Global System for Mobile Communications (GSM), Enhanced Data GSM Environment (EDGE), wideband code division multiple access (W-CDMA), Long Term Evolution (LTE), 5th Generation (5G) New Radio (NR), code division multiple access (CDMA), time division multiple access (TDMA), Bluetooth, Wireless Fidelity (Wi-Fi) (such as IEEE 802.11a, IEEE 802.11b, IEEE 802.11g or IEEE 802.11n), voice over Internet Protocol (VoIP), light fidelity (Li-Fi), Worldwide Interoperability for Microwave Access (Wi-MAX), a protocol for email, instant messaging, and a Short Message Service (SMS).

Modifications, additions, or omissions may be made to the example electronic device 102 without departing from the scope of the present disclosure. For example, in some embodiments, the example electronic device 102 may include any number of other components that may not be explicitly illustrated or described for the sake of brevity.

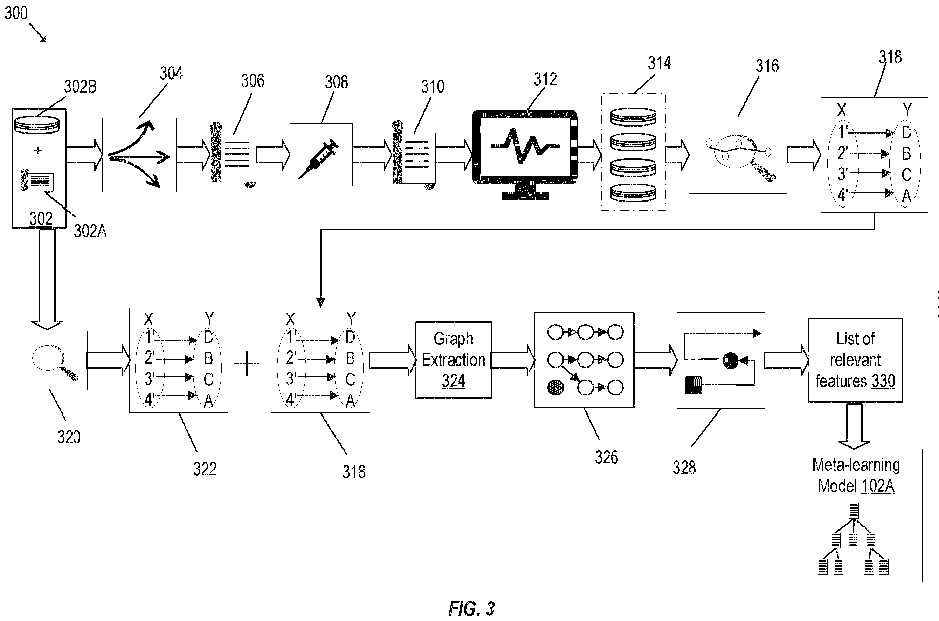

FIG. 3 is a diagram that illustrates an execution pipeline for automatic denoising of machine learning projects, in accordance with an embodiment of the disclosure. FIG. 3 is described in conjunction with elements from FIG. 1 and FIG. 2. With reference to FIG. 3, there is shown an execution pipeline 300. The exemplary execution pipeline 300 may include a set of operations that may be executed by one or more components of FIG. 1, such as, the electronic device 102. The operations may include a conversion operation 304, an instrumentation operation 308, a data-frame snapshots capture operation 312, a snapshot analysis operation 316, an abstract syntax tree (AST) analysis operation 320, a graph construction operation 324, and a path analysis operation 328. The exemplary execution pipeline 300 may further include an ML project 302 (including an ML pipeline 302A and a data-frame 302B), an atomized ML pipeline 306, an instrumented ML pipeline 310, data-frame snapshots 314, an implicit feature-mapping 318, an explicit column-mapping 322, an FPG 326, a list of relevant features 330, and the meta-learning model 102A. The set of operations may be performed by the electronic device 102 or the processor 204 to automatically denoise an ML project (such as, the ML project 302), as described herein.

At 304, the conversion operation may be executed. In the conversion operation, the processor 204 may be configured to receive the ML project 302. The ML project 302 may include the data-frame 302B and the ML pipeline 302A (including the plurality of code statements associated with the plurality of features corresponding to the ML project 302). In the conversion operation, the processor 204 may be further configured to determine the one or more atomic steps corresponding to the ML pipeline 302A to determine the atomized ML pipeline 306. Herein, each atomic step may correspond to a unitary operation such as, an assignment of a variable, a renaming of a feature, a deletion of a feature, and the like. The processor 204 may convert the ML pipeline 302A into the atomized ML pipeline 306 so that each statement of the atomized ML pipeline 306 may correspond to one operation.

At 308, the instrumentation operation may be executed. In the instrumentation operation, the processor 204 may be configured to instrument the atomized ML pipeline 306 pipeline to determine the instrumented ML pipeline 310 including one or more operations corresponding to the ML project 302. To instrument the atomized ML pipeline 306, one or more code statements may be injected in the atomized ML pipeline 306 to generate a log of events, warnings, data-frame used, and the like. Herein, the instrumented ML pipeline 310 may include one or more operations corresponding to the ML project 302.

At 312, the data-frame snapshots capture operation may be executed. In the data-frame snapshots capture operation, the processor 204 may be configured to execute the instrumented ML pipeline 310 to capture one or more data-frame snapshots (such as, the data-frame snapshots 314) based on each of the one or more operations. Herein, the instrumented ML pipeline 310 may be run to generate the log of actions, such as, an insertion of features, a renaming of features, a deletion of features, an assignment of values, and the like, in each of the one or more operations. The data-frame snapshots 314 may be obtained by taking a snapshot of each of the generated log of actions.

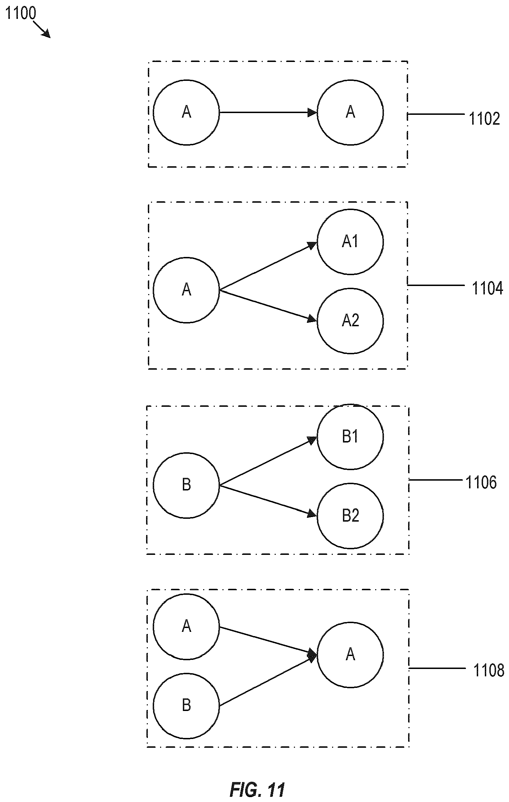

At 316, the snapshot analysis operation may be executed. In the snapshot analysis operation, the processor 204 may be configured to analyze the data-frame snapshots 314 to determine the implicit feature mappings 318. Herein, feature name changes may be tracked through each atomic statement to identify the feature mappings between an original data-frame (including the plurality of features corresponding to the ML project 302) and a final data-frame (including one or more features of the plurality of features present in each of the one or more atomic steps in the atomized ML pipeline 306). Details of the analysis of the data-frame snapshots 314 to determine the implicit feature mappings 318 are further provided, for example, in FIG. 10 and 11.

At 320, the AST analysis operation may be executed. In the AST analysis operation, the processor 204 may be configured to retrieve an abstract syntax tree (AST) corresponding to the atomized ML pipeline 306 to determine the explicit feature mappings 322. It may be noted that some features may be explicitly renamed in the ML pipeline 302A by developers. Further, in certain cases, the new feature names (as changed by the developers) may be significantly different from the original feature names and thus may not be captured by use of a textual similarity metrices. Such features may correspond to explicit features. The explicit feature may be captured as the explicit feature mappings 322 based on a traversal of the AST. Details of the analysis of the AST to determine the explicit feature mappings 318 are further provided, for example, in FIG. 8.

At 324, the graph construction operation may be executed. In the graph construction operation, the processor 204 may be configured to construct the feature provenance graph (FPG) 326 based on the ML pipeline 302A and the captured one or more data-frame snapshots (such as, the data-frame snapshots 314). The FPG 326 may be a directed acyclic graph (DAG) that may represent an evolution of nomenclature of each feature throughout various feature engineering steps in the ML pipeline 302A. Herein, the DAG may include a plurality of nodes and a set of directed edges between a set of nodes of the plurality of nodes. Each node may be associated with one feature and each edge may denote a relationship between feature nomenclature at different steps of the feature engineering process associated with the received ML project. The FPG 326 may be constructed based on the implicit feature mapping 318 and the explicit features mapping 322. Details of the FPG 326 are further provided, for example, in FIG. 4B.

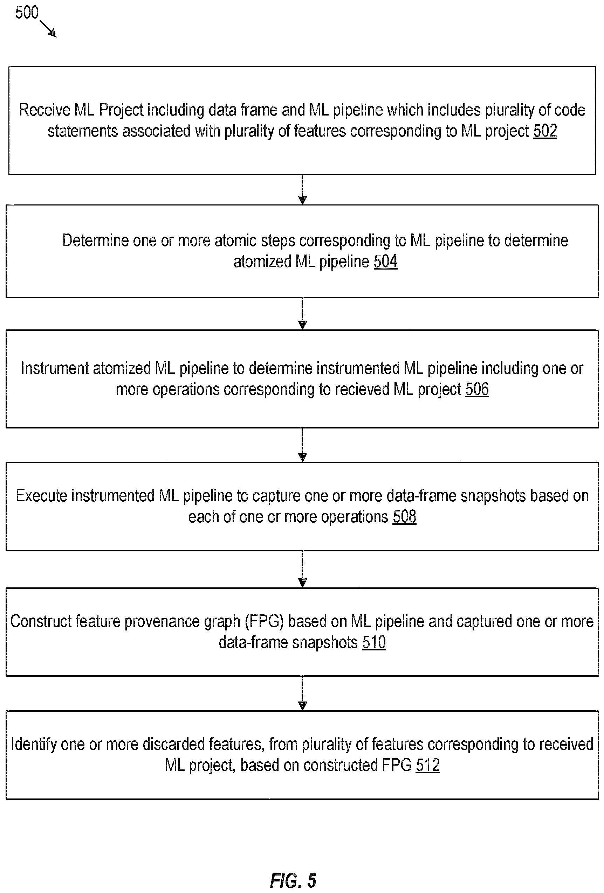

At 328, the path analysis operation may be executed. In the path analysis operation, the processor 204 may be configured to identify one or more discarded features, from the plurality of features corresponding to the ML project 302, based on the constructed FPG 326. Once the one or more discarded features may be determined, the processor 204 may be configured to determine the list of relevant features 330. The determined list of relevant features 330 may be used to train the meta-learning model 102A. For example, the processor 204 may iterate through each node in an initial data-frame. For each node, the processor 204 may perform a depth first search traversal (for example, a forward or a backward depth first search) to find whether there exists any path from the initial data-frame to the final data-frame. If there exist a path, then the processor 204 may add a source node feature name to the list of relevant features 330. Features not included in the list of relevant features 330 may correspond to the one or more discarded features. Details of identification of the one or more discarded features are further provided, for example, in FIG. 5.

In an embodiment, the processor 204 may be further configured to determine one or more relevant features, from the plurality of features corresponding to the ML project 302, based on the identified one or more discarded features. The processor 204 may be further configured to train the meta-learning model 102A associated with the ML project 302 based on the determined one or more relevant features.

Typically, human data-scientists may discard several features of an input data-frame at a feature engineering stage associated with an ML project. The deleted features may constitute a source of noise for learning for the automatic generation of the ML pipeline. However, there may be multiple reasons and mechanics to prune features. Thus, simple analyses or heuristics may not be adequate to identify the discarded features so as to improve the automatic generation of ML pipelines.

The electronic device 102 of the present disclosure may employ a dynamic dataflow analysis of ML pipelines to accurately identify data features that may not be used or may be effectively discarded by an ML pipeline of the ML project. The disclosed electronic device 102 may systematically track the execution of the ML pipeline, operation-by-operation, and may record addition, removal, or modification of data features in a data-frame, and may thereby clearly identify the features that may be used by the ML pipeline. Further, the disclosed electronic device 102 may label the ML pipeline of the ML project with discarded features to obtain a cleaner ML pipeline and data-frame, which may be used for automatic generation of ML pipelines with a higher accuracy. The accurate identification of discarded features may also result in generation of higher quality meta-learning models (e.g., the meta-learning model 102A) from the ML project, based on the obtained cleaner ML pipelines and data-frames.

For example, the processor 204 may extract a set of meta-features from the data-frame associated with each of the plurality of ML projects. Herein, the set of meta-features may also include meta-features corresponding to the one or more discarded features. The set of meta-features may be extracted based on an injection of a meta-feature extractor such as, the meta-features method call, in each of the plurality of ML projects. The data-frame may be then passed to a meta-features method in order to extract the set of meta-features comprising columns, missing values, and an indication of a presence of text.

The processor 204 may extract a set of ML pipeline components from the set of ML pipelines associated with each of the plurality of ML projects. For example, the set of ML pipeline components may include "fillna", "TfidfVectorizer", and "logisticregression" ML pipeline components. Herein, the "fillna" may be a function used to fill missing values in rows of the data-frame. The "TfidfVectorizer" may be a term-frequency inverse-document-frequancy function that may transform texts into meaningful numerical values. The "logisticregression" may be a function to predict values, based on regression.

The processor 204 may provide the extracted set of meta-features and the extracted set of ML pipeline components for the training of the meta-learning model 102A. As the extracted set of meta-features and the extracted set of ML pipeline components may include the one or more discarded features, the meta-learning model 102A, so learnt, may be better.

Once, the meta-learning model 102A may be trained, the processor 204 may use the trained meta-learning model 102A to automatically synthesis new ML pipelines and/or denoise ML projects.

FIG. 4A is a diagram that illustrates an exemplary scenario of an exemplary ML pipeline corresponding to an exemplary ML project, in accordance with an embodiment of the disclosure. FIG. 4A is described in conjunction with elements from FIG. 1, FIG. 2, and FIG. 3. With reference to FIG. 4A, there is shown an exemplary scenario 400A. The scenario 400A may include an exemplary ML pipeline 402. The ML pipeline 402 may include a first statement 404, a second statement 406, a third statement 408, a fourth statement 410, a fifth statement 412, a sixth statement 414, and a seventh statement 416. The electronic device 102 or the processor 204 may construct a feature provenance graph (FPG) such as, an FPG 400B of FIG. 4B, based on the ML pipeline 402, as described herein.

Based on the first statement 404, the processor 204 may identify a plurality of features, such as, a feature "A*", a feature "B*", a feature "C", a feature "D", and a feature "E". Based on the second statement 406, the processor 204 may drop (i.e., delete/discard) the feature "C". Based on the third statement 408, the processor 204 may rename the feature "A*" to "A" and the feature "B*" to "B". Based on the fourth statement 410, the processor 204 may call pd.get_dummies function on the features "A" and "D", to convert the features "A" and "D" to corresponding numerical features. Based on the fifth statement 412, the processor 204 may convert the feature "A" to a feature "A_a" and a feature "A_b". Further, the processor 204 may convert the feature "D" a feature "D_x" and a feature "D_y". Also, the features "A_a", "A_b", "B", "D_x", and "D_y" may be assigned to a variable "X". Based on the sixth statement 414, the processor 204 may assign the feature "E" to a variable "y". At seventh statement 416, the processor 204 may call a logistic regression function to perform regression, based on the variables "X" and "y".

FIG. 4B is a diagram that illustrates an exemplary feature provenance graph (FPG) constructed based on the ML pipeline of FIG. 4A, in accordance with an embodiment of the disclosure. FIG. 4B is described in conjunction with elements from FIG. 1, FIG. 2, FIG. 3, and FIG. 4A. With reference to FIG. 4B, there is shown an exemplary FPG 400B. The FPG 400B may be constructed based on the ML pipeline 402 of FIG. 4A. The FPG 400B may include a first layer of nodes 418, a second layer of nodes 420, a third layer of nodes 422, a fourth layer of nodes 424, and a fifth layer of nodes 426. The FPG 400B may further include a set of first directed edges (including edges 428A to 428E), a set of second directed edges (including edges 432A to 432E). The FPG 400B may further include node referred to as a null successor 430, for a deleted feature. The electronic device 102 or the processor 204 may be configured to construct the exemplary FPG 400B based on the ML pipeline 402, as described herein.

With reference to FIG. 4A, based on the first statement 404, the plurality of features, such as, "A*", "B*", C, D, and E, may be identified. With reference to FIG. 4B, the processor 204 may initialize the FPG 400B as a directed acyclic graph including one node for each of the plurality of features, as shown in the first layer of nodes 418.

With reference to FIG. 4A, based on the second statement 406, the feature "C" may be dropped. Hence, with reference to FIG. 4B, the processor 204 may drop the feature "C" from the second layer of nodes 420 of the FPG 400B. The second layer of nodes 420 may include five nodes, one for each of the plurality of features as "A*", "B*", "C", "D", and "E". However, the node corresponding to the feature "C" may be marked as 'X', indicating that the feature "C" is deleted.

With reference to FIG. 4A, based on the third statement 408, the features "A*" and "B*" may be renamed to "A" and "B", respectively. Hence, with reference to FIG. 4B, the processor 204 may assign a label "A" to the feature "A*" in the third layer of nodes 422. The processor 204 may further assign a label "B" to the feature "B*" in the third layer of nodes 422. The feature "C" may not be carried over to the third layer of nodes 422. The nodes for the features "D" and "E" may remain unchanged in the third layer of nodes 422.

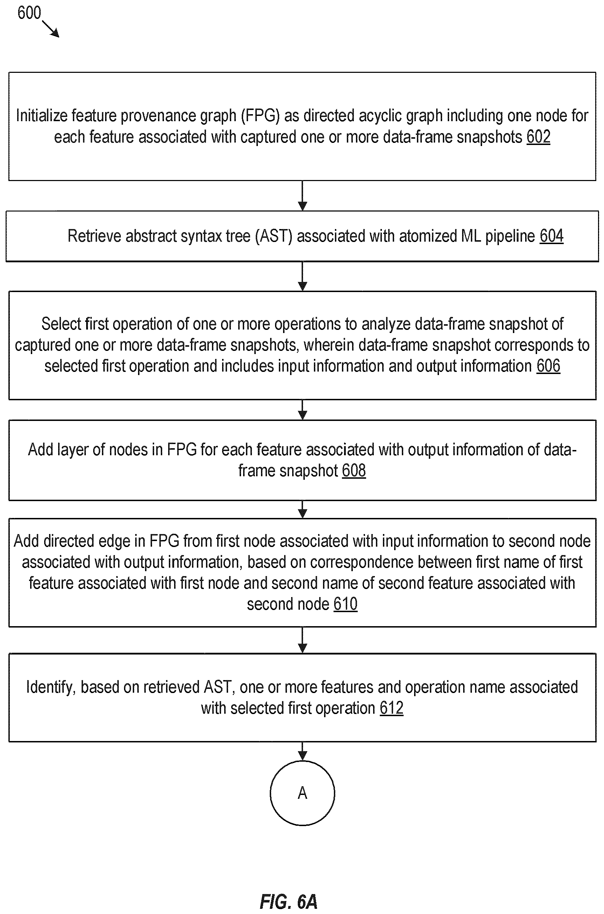

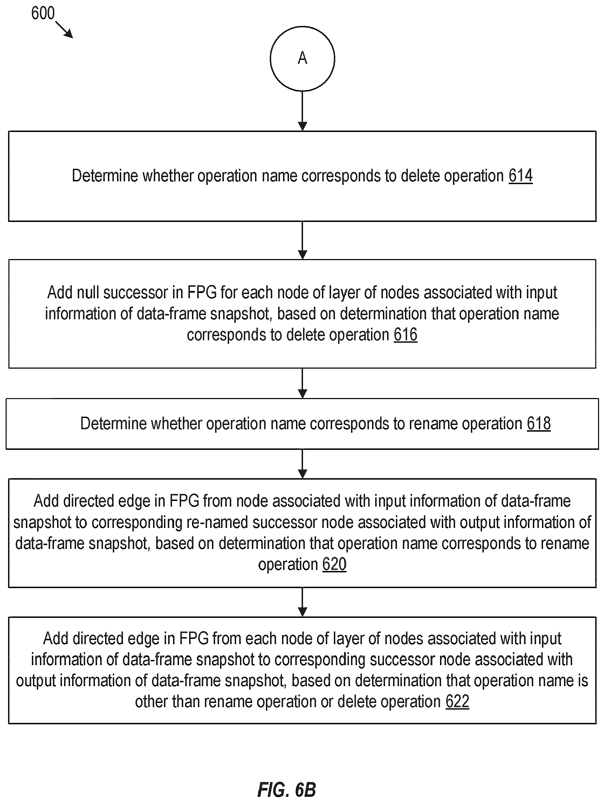

With reference to FIG. 4A, based on the fifth statement 412, the feature "A" may be converted to the features "A_a" and "A_b". Further, the feature "D" may be converted to the features "D_x" and "D_y". Hence, with reference to FIG. 4B, the processor 204 may split the feature "A" of the third layer of nodes 422 to two nodes; one node may be assigned a label "A_a" and the other node may be assigned a label "A_b" in the fourth layer of nodes 424. Similarly, the processor 204 may split the feature "D" of the third layer of nodes 422 to two nodes, wherein one node may be labelled "D_x" and the other node may be labelled "D_y" in the fourth layer of nodes 424. The feature "D" may be further split into another feature "D_z" in the fourth layer of nodes 424. The processor 204 may finally drop the feature "D_z" in the fifth layer of nodes 426 to obtain the FPG 400B. The fifth layer of nodes 426 of the FPG 400B may include nodes representative of the features "A_a", "A_b", "B", "D_x", "D_y", and "E", as shown in FIG, 4B. Details of the construction of the FPG are further provided, for example, in FIGs. 6A and 6B.

It should be noted that the scenario 400A and the FPG 400B of FIGs. 4A and 4B, respectively, are for exemplary purposes and should not be construed as limiting the scope of the disclosure.

FIG. 5 is a diagram that illustrates a flowchart of an exemplary method for automatic denoising of machine learning projects, in accordance with at least one embodiment described in the present disclosure. FIG. 5 is described in conjunction with elements from FIG. 1, FIG. 2, FIG. 3, FIG. 4A, and FIG. 4B. With reference to FIG. 5, there is shown a flowchart 500. The method illustrated in the flowchart 500 may start at block 502 and may be performed by any suitable system, apparatus, or device, such as by the example electronic device 102 of FIG. 1 or the processor 204 of FIG. 2. Although illustrated with discrete blocks, the steps and operations associated with one or more of the blocks of the flowchart 500 may be divided into additional blocks, combined into fewer blocks, or eliminated, depending on the particular implementation.

At block 502, the ML project including a data-frame and an ML pipeline may be received. The ML pipeline may include a plurality of code statements associated with a plurality of features corresponding to the ML received project. The processor 204 may be configured to receive the ML project (such as, the ML project-1 302) including the data-frame (e.g., the data-frame 302B) and the ML pipeline (e.g., the ML pipeline 302A). The ML pipeline 302A may include a plurality of code statements associated with the plurality of features corresponding to the ML project 302. The ML project 302 may help applications to perform ML tasks such as, prediction, regression, and the like, without being programmed to do so. The ML pipeline 302A may include a sequence of operations required to train an ML model for a specific ML task and use the trained ML model for predictions on new instances of data. The plurality of code statements may correspond to the sequence of operations. The plurality of features may be independent variables provided as input to the ML model for training.

At block 504, one or more atomic steps corresponding to the ML pipeline may be determined to determine an atomized ML pipeline. The processor 204 may be configured to determine the one or more atomic steps corresponding to the ML pipeline to determine the atomized ML pipeline. It may be appreciated that each atomic step may perform one operation. The received ML pipeline may perform one or more atomic steps such as, an assignment of a variable, a renaming of a feature, a deletion of a feature, and the like. For example, the processor 204 may convert the ML pipeline 302A into the one or more atomic statements to determine the atomized ML pipeline 306.

In an embodiment, the determination of the one or more atomic steps corresponding to the ML pipeline may be based on an application of a source-code lifting technique on the plurality of code statements. Herein, the source-code lifting technique may correspond to a code refactoring technique that may be implemented using libraries, such as, for example, a "python-pl" library to lift a source code. The source-code lifting technique may capture atomic changes in the data-frame to identify precise mapping of the features between various steps of the ML pipeline. Thus, based on the application of the source-code lifting technique, each of the plurality of code statements may be converted into corresponding atomic steps. For example, a given code statement of the plurality of code statements may be:

$$dataset = pd.get\_dummies(dataset.drop([A,B]), columns = [C,D])$$

Herein, two operations may be performed. In one operation, a feature A and a feature B may be dropped. In another operation, a feature C and a feature D may be included. By using the source-code lifting technique, the given code statement may be atomized into the following two atomic steps/statements:

$$dataset\_1 = dataset.drop([A,B])$$

$$dataset = pd.get\_dummies(dataset\_1, columns = [C,D])$$

Herein, the given code statement may be converted into two atomic steps. At a first atomic step, the feature A and the feature B may be dropped. At a second atomic step, the feature C and the feature D may be included in the received ML pipeline.

At block 506, the atomized ML pipeline may be instrumented to determine an instrumented ML pipeline including one or more operations corresponding to the received ML project. The processor 204 may be configured to instrument the atomized ML pipeline (e.g., the atomized ML pipeline 306) to determine the instrumented ML pipeline (e.g., the instrumented ML pipeline 310) including one or more operations corresponding to the received ML project (e.g., the ML project 302). To instrument the atomized ML pipeline, one or more code statements may be included to the atomized ML pipeline. On an execution of the instrumentation of the atomized ML pipeline, a log of events, warnings, data-frame used, and the like, may be generated. Herein, the instrumented ML pipeline may include one or more operations corresponding to the ML project.

In an embodiment, the instrumentation of the atomized ML pipeline may be based on the application of the method call injection technique on the atomized ML pipeline. Herein, a source code instrumentation technique may be used to inject predefined function calls to get feature information associated with the received ML project. For example, Python language's "ast" package may be used to inject the method call after each of the one or more atomic steps of atomized ML pipeline. It may be noted that although exemplary codes, libraries, and packages provided in the disclosure correspond to a high-level programming language (e.g., "Python" programming language) by use of a web-based computational notebooks, the teachings of the disclosure may be valid for other ML pipelines written in different languages and development platforms. It may be further noted that the web-based computational notebooks may correspond to computational structures, that may be used to develop/represent ML pipelines, especially during the development phase. For example, a web-based computational notebook may be used to develop a script portion (e.g., an ML pipeline) of an ML project.

At block 508, the instrumented ML pipeline may be executed to capture one or more data-frame snapshots based on each of the one or more operations. The processor 204 may be configured to execute the instrumented ML pipeline (e.g., the instrumented ML pipeline 310) to capture one or more data-frame snapshots (e.g., the data-frame snapshots 314) based on each of the one or more operations. For example, once the method call is injected after each of the one or more atomic steps of the atomized ML pipeline, the instrumented ML pipeline may be run to generate the log of actions (such as, an insertion of a feature, a renaming of a feature, a deletion of a feature, an assignment of values, and the like) in each of the one or more operations. In an example, as the execution of instrumented ML pipeline may be time consuming therefore, the data-frame snapshots 314 may be obtained based on a capture of a snapshots of the generated log of actions and a subsequent storage of the captured snapshot in a JSON file. The storage of the captured snapshot may be useful as based on the storage the instrumented ML pipeline may not be required to run multiple times. Thus, the processor 204 may programmatically execute the entire instrumented ML pipeline associated with the received ML project and may store a summary of the captured one or more data-frame snapshots in a separate JSON file.

In an embodiment, each of the captured one or more data-frame snapshots may include at least one of: a line number, an input and an output of each variable, and a set of feature names associated with a data-frame type. Herein, the line number may be line of each of the one or more atomic steps of the atomized ML pipeline. The input and output of each variable may be the input and output values of each variable in each of the one or more operations. The set of feature names associated with the data-frame type may be names of the features of a particular data-frame type.

At block 510, a feature provenance graph (FPG) may be constructed based on the ML pipeline and the captured one or more data-frame snapshots. The processor 204 may be configured to construct the FPG (e.g., the FPG 400B) based on the ML pipeline and the captured one or more data-frame snapshots. The FPG (such as, the FPG 400B) may represent an evolution of each of the plurality of features of the received ML project, throughout various feature engineering steps (including, for example, the ML pipeline 402) associated with the received ML project (such as, the ML pipeline 402). The FPG may be a directed acyclic graph (DAG) that may include a plurality of nodes and directed edges. Each node may be associated with a feature and each edge may denote a relationship between feature nomenclature at different steps of the feature engineering process associated with the received ML project. Details of the construction of the FPG are further provided, for example, in FIGs. 6A and 6B.

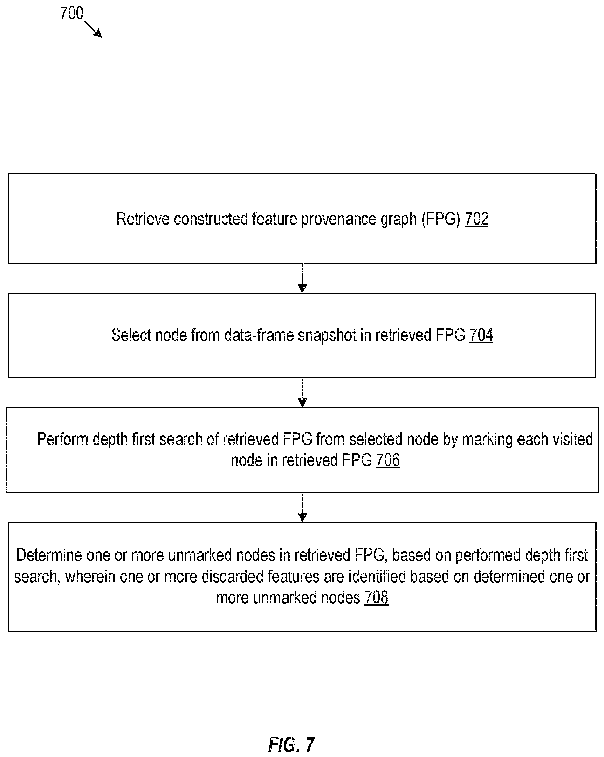

At block 512, one or more discarded features may be identified from the plurality of features corresponding to the received ML project, based on the constructed FPG. The processor 204 may be configured to identify the one or more discarded features from the plurality of features corresponding to the received ML project, based on the constructed FPG. For example, with reference to FIG. 4B, the processor 204 may identify the one or more discarded features as the feature "C" and the feature "D_z". The processor 204 may track the plurality of features of the received ML project through the FPG 400B to determine the one or more discarded features. Details related to the identification of the one or more discarded features are described, for example, in FIGs. 7, 8, 9, 10, and 11. Control may pass to end.

Although the flowchart 500 is illustrated as discrete operations, such as 502, 504, 506, 508, 510, and 512. However, in certain embodiments, such discrete operations may be further divided into additional operations, combined into fewer operations, or eliminated, depending on the particular implementation without detracting from the essence of the disclosed embodiments.

FIGs. 6A and 6B are diagrams that collectively illustrate a flowchart of an exemplary method for construction of the feature provenance graph (FPG), in accordance with at least one embodiment described in the present disclosure. FIGs. 6A and 6B are described in conjunction with elements from FIG. 1, FIG. 2, FIG. 3, FIG. 4A, FIG. 4B, and FIG. 5. With reference to FIGs. 6A and 6B, there is shown a flowchart 600. The method illustrated in the flowchart 600 may start at 602 and may be performed by any suitable system, apparatus, or device, such as by the example electronic device 102 of FIG. 1 or the processor 204 of FIG. 2. Although illustrated with discrete blocks, the steps and operations associated with one or more of the blocks of the flowchart 600 may be divided into additional blocks, combined into fewer blocks, or eliminated, depending on the particular implementation.

At block 602, the feature provenance graph (FPG) may be initialized as a directed acyclic graph including one node for each feature associated with the captured one or more data-frame snapshots. The processor 204 may be configured to initialize the feature provenance graph (FPG) as the directed acyclic graph including one node for each feature associated with the captured one or more data-frame snapshots. For example, based on the captured one or more data-frame snapshots (such as, the one or more data-frame snapshots 314), a first layer of nodes may be initialized in the DAG, for each feature associated with the captured one or more data-frame snapshots. Herein, each node may be labelled with a name of the corresponding feature.

With reference to FIG. 4B, the features associated with the captured one or more data-frame snapshots may be the feature "A*", the feature "B*", the feature "C", the feature "D", and the feature "E". Herein, the processor 204 may initialize the FPG 400B as the directed acyclic graph including one node for each feature associated with the captured one or more data-frame snapshot, as shown in the first layer of nodes 418. The first layer of nodes 418 may include fives nodes one for each of the plurality of features, such as, "A*", "B*", "C", "D", and "E". Each node may be labelled according to the corresponding feature.

At block 604, an abstract syntax tree (AST) associated with the atomized ML pipeline (e.g., the atomized ML pipeline 306) may be retrieved. The processor 204 may be configured to retrieve the abstract syntax tree (AST) associated with the atomized ML pipeline. It may be appreciated that the AST of a code may be a tree representation of an abstract syntactic framework of the code in a formal language. The AST may not include every detail of the code or syntax of the code. Rather, the AST may include only abstract syntax in a formal language, such as, a "while" statement, an "if" statement, a "branch" statement, a "comparison" statement, an "assignment" statement, a variable name, and the like. Each node of the tree may represent a construct of the code. Once the ML pipeline is atomized to determine the atomized ML pipeline, the processor 204 may determine the AST associated with the atomized ML pipeline and store the determined AST, for example, in the memory 206. The processor 204 may be configured to retrieve the AST associated with the atomized ML pipeline from the memory 206, at 604.

At block 606, a first operation of the one or more operations may be selected to analyze a data-frame snapshot of the captured one or more data-frame snapshots. Herein, the data-frame snapshot may correspond to the selected first operation and may include input information and output information. The processor 204 may be configured to select the first operation of the one or more operations to analyze the data-frame snapshot of the captured one or more data-frame snapshots. The input information may be input values and the output information may be output values of the data-frame corresponding to the data-frame snapshot being analyzed. The first operation may need to be executed based on each operations of the one or more operations. One-by-one, each operation of the one or more operations may be selected as the first operation. For example, with reference to FIG. 4A, the input information associated with the third statement 408 may be include the feature "A*" and the feature "B*". The output information associated with the third statement 408 may be the features "A" and "B" corresponding to the features "A*" and "B*", respectively. Herein, the selected first operation may be a rename operation.

At block 608, a layer of nodes may be added in the FPG for each feature associated with the output information of the data-frame snapshot. The processor 204 may be configured to add the layer of nodes in the FPG for each feature associated with the output information of the data-frame snapshot. For example, with reference to FIG. 4A, the input information for the second statement 406 may be the feature "A*", the feature "B*", the feature "C", the feature "D", and the feature "E". The output information for the second statement 406 may be the feature "A*", the feature "B*", the feature "D", and the feature "E". The feature "C" may be dropped. Herein, the selected first operation may be a drop (or delete) operation. Based on the output information, the second layer of nodes 420 may be added for each feature in the output information of the data-frame snapshot. The node for the feature "C" may be marked as 'X' in the second layer of nodes 420, as the feature "C" is dropped and may not be present in the output information. Similarly, with reference to FIGs. 4A and 4B, the input information for the third statement 408 may be the feature "A*" and the feature "B*". The output information for the third statement 408 may be "A" for the feature "A*", "B" for the feature "B*", "D" for the feature "D", and "E" for the feature "E". Herein, the selected first operation may be the rename operation. Thus, based on the output information the third layer of nodes 422 may be added in the FPG 400B for each feature. Herein, the third layer of nodes 422 may include four nodes, namely, a node labelled as "A", a node labelled as "B", a node labelled as "D", and a node labelled as "E".

At block 610, a directed edge may be added in the FPG from a first node associated with the input information to a second node associated with the output information, based on a correspondence between a first name of a first feature associated with the first node and a second name of a second feature associated with the second node. The processor 204 may be configured to add the directed edge in the FPG from the first node associated with the input information to the second node associated with the output information, based on the correspondence between the first name of the first feature associated with the first node and the second name of the second feature associated with the second node. As discussed, the directed edge may provide the relationship between the input information and the output information. For example, with reference to FIGs. 4A and 4B, the input information for the second statement 406 may be the feature "A*", the feature "B*", the feature "C", the feature "D", and the feature "E". The output information for the second statement 406 may be the feature "A*", the feature "B*", the feature "D", and the feature "E". The feature "C" may be dropped. Herein, the edge 428A may connect the node corresponding to the feature "A*" in the first layer of nodes 418 to the node corresponding to the feature "A*" in the second layer of nodes 420. Further, the edge 428B may connect the node corresponding to the feature "B*" in the first layer of nodes 418 to the node corresponding to the feature "B*" in the second layer of nodes 420. The edge 428C may connect the node corresponding to the feature "C" in the first layer of nodes 418 to a node (i.e., the null successor 430) marked as 'X', denoting that the feature "C" is dropped in the second layer of nodes 420. Further, the edge 428D may connect the node corresponding to the feature "D" in the first layer of nodes 418 to the node corresponding to the feature "D" in the second layer of nodes 420. Herein, the edge 428E may connect the node corresponding to the feature "E" in the first layer of nodes 418 to the node corresponding to the feature "E" in the second layer of nodes 420.

At block 612, one or more features and an operation name associated with the selected first operation may be identified based on the retrieved AST. The processor 204 may be configured to identify, based on the retrieved AST, one or more features and the operation name associated with the selected first operation. Herein, the operation name may be operations, such as, a rename operation, a delete operation, and the like, which may be correspond to the selected first operation. For example, with reference to FIGs. 4A and 4B, if the second statement 406 is the selected first operation, then the one or more features may be identified as the feature "C" and the operation name may be identified as a drop (or delete) operation.

At block 614, it may be determined whether the operation name corresponds to a delete operation. The processor 204 may be configured to determine whether the operation name corresponds to the delete operation. It may be appreciated that the delete operation may be used to discard a feature on which the delete operation may be applied. For example, with reference to FIGs. 4A and 4B, as the second statement 406 may correspond to the delete operation, a corresponding feature (i.e., the feature "C") on which the second statement 406 is applied may be discarded.. Thus, the second statement 406 may lead to the deletion of the feature "C".

At block 616, a null successor may be added in the FPG for each node of the layer of nodes associated with the input information of the data-frame snapshot, based on the determination that the operation name corresponds to the delete operation. The processor 204 may be configured to add the null successor in the FPG for each node of the layer of nodes associated with the input information of the data-frame snapshot, based on the determination that the operation name corresponds to the delete operation. The null successor may denote that the corresponding feature is deleted and may not be carried forward in the FPG. For example, with reference to FIGs. 4A and 4B, the second statement 406 may drop the feature "C". Herein, the selected first operation for the second statement 406 may be identified as the delete operation and the corresponding feature may be identified as the feature "C". Hence, the input information may include the feature "C", which may be deleted, based on the second statement 406. Herein, the null successor 430, which may be marked as 'X', may be added for the feature "C" in the second layer of nodes 420 of the FPG 400B. Similarly, if the input information includes more than one features that may be subject to the deletion operation, then for each node of the layer of nodes associated with the input information one null successor may be added.

At block 618, it may be determined whether the operation name corresponds to a rename operation. The processor 204 may be configured to determine whether the operation name corresponds to the rename operation. The rename operation may be used to rename features. For example, with reference to FIGs. 4A and 4B, the third statement 408 may rename the feature "A*" to "A" and the feature "B*" to "B" by use of a rename function. Herein, the input information may be the feature "A*" and the feature "B*" and the selected first operation may be identified as the rename operation.

At block 620, a directed edge may be added in the FPG from a node associated with the input information of the data-frame snapshot to a corresponding re-named successor node associated with the output information of the data-frame snapshot, based on the determination that the operation name corresponds to the rename operation. The processor 204 may be configured to add the directed edge in the FPG from the node associated with the input information of the data-frame snapshot to the corresponding re-named successor node associated with the output information of the data-frame snapshot, based on the determination that the operation name corresponds to the rename operation. For example, with reference to FIGs. 4A and 4B, the third statement 408 may rename the feature "A*" to "A" and the feature "B*" to "B" by using a rename function. Herein, the input information may be the feature "A*" and the feature "B*" and the selected first operation may be identified as the rename operation. Hence, the directed edge 432A may connect the node labelled as "A*" in the second layer of nodes 420 to the node labelled as "A" in the third layer of nodes 422. Similarly, the directed edge 432B may connect the node labelled as "B*" in the second layer of nodes 420 to the node labelled as "B" in the third layer of nodes 422.

At block 622, a directed edge may be added in the FPG from each node of the layer of nodes associated with the input information of the data-frame snapshot to a corresponding successor node associated with the output information of the data-frame snapshot, based on the determination that the operation name is other than the rename operation or the delete operation. The processor 204 may be configured to add the directed edge in the FPG from each node of the layer of nodes associated with the input information of the data-frame snapshot to the corresponding successor node associated with the output information of the data-frame snapshot, based on the determination that the operation name is other than the rename operation or the delete operation. For example, with reference to FIGs. 4A and 4B, the directed edge 432D may be added in the FPG 400B to connect the node labelled as "D" in the second layer of nodes 420 to the node labelled as "D" in the third layer of nodes 422. Similarly, the directed edge 432E may connect the node labelled as "E" in the second layer of nodes 420 to the node labelled as "E" in the third layer of nodes 422. Control may pass to end.

Although the flowchart 600 is illustrated as discrete operations, such as 602, 604, 606, 608, 610, 612, 614, 616, 618, 620, and 622. However, in certain embodiments, such discrete operations may be further divided into additional operations, combined into fewer operations, or eliminated, depending on the particular implementation without detracting from the essence of the disclosed embodiments.

FIG. 7 is a diagram that illustrates a flowchart of an exemplary method for identification of one or more discarded features from the plurality of features corresponding to the ML project based on the constructed FPG, in accordance with at least one embodiment described in the present disclosure. FIG. 7 is described in conjunction with elements from FIG. 1, FIG. 2, FIG. 3, FIG. 4A, FIG. 4B, FIG. 5, FIG. 6A, and FIG. 6B. With reference to FIG. 7, there is shown a flowchart 700. The method illustrated in the flowchart 700 may start at block 702 and may be performed by any suitable system, apparatus, or device, such as by the example electronic device 102 of FIG. 1 or the processor 204 of FIG. 2. Although illustrated with discrete blocks, the steps and operations associated with one or more of the blocks of the flowchart 700 may be divided into additional blocks, combined into fewer blocks, or eliminated, depending on the particular implementation.

At block 702, the constructed feature provenance graph (FPG) may be retrieved. The processor 204 may be configured to retrieve the constructed feature provenance graph (FPG). For example, the constructed FPG 400B may be stored, for example, in the memory 206. The processor 204 may retrieve the constructed FPG 400B from the memory 206.

At block 704, a node may be selected from a data-frame snapshot in the retrieved FPG. The processor 204 may be configured to select the node from the data-frame snapshot in the retrieved FPG. Herein, the data-frame snapshot may be one of a final data-frame snapshot or an initial data-frame snapshot in the FPG. One node may be selected from the data-frame snapshot, for a traversal of the FPG.

At block 706, a depth first search of the retrieved FPG may be performed from the selected node by marking each visited node in the retrieved FPG. The processor 204 may be configured to perform the depth first search of the retrieved FPG from the selected node by marking each visited node in the retrieved FPG. It may be appreciated that the depth first search (DFS) of a tree may correspond to a traversal of the tree from a root node of the tree to a leaf node along a branch, a subsequent back-tracking to an unexplored path, and a similar traversal to a leaf node along the newly explored path, until all paths of the tree are explored and traversed. The DFS may use back tracking to search paths in the tree. The DFS of the present disclosure may traverse the FPG from the selected node (which may be considered as the root node of a resultant tree associated with the FPG) by marking each visited node in the retrieved FPG.

In an embodiment, the depth first search may correspond to at least one of: a forward depth first search or a backward depth first search. The forward depth first search may be performed based on a forward traversal from a root node in the tree. The forward depth first search of the present disclosure may traverse the FPG from the selected node that may correspond to the initial data-frame snapshot. For example, with reference to FIG. 4B, the first layer of nodes 418 may be associated with the initial data-frame snapshot. Herein, for example, the node labelled as "C" may be selected to perform the forward depth first search. From the node labelled as "C" in the first layer of nodes 418, the forward depth first search may move to the null successor 430 in the second layer of nodes 420 of the FPG 400B.

The backward depth first search may be performed based on a backwards traversal from a leaf node in the tree. The backward depth first search of the present disclosure may traverse the FPG from the selected node that may correspond to the final data-frame snapshot. For example, with reference to FIG. 4B, the fifth layer of nodes 426 may be associated with the final data-frame snapshot. Herein, for example, the node labelled as "D_x" may be selected to perform the backward depth first search. From the node labelled as "C" in the fifth layer of nodes 426, the backwards depth first search may move till the node labelled as "D" in the first layer of nodes 418. In this way, each of the nodes in the fifth layer of nodes 426 may be selected one by one and backward depth first search may be performed by traversing backwards from the selected node. Each node encountered on traversal may be marked to denote that particular node is covered and appears in the fifth layer of nodes 426.

At block 708, one or more unmarked nodes may be determined in the retrieved FPG, based on the performed depth first search. Herein, the one or more discarded features may be identified based on the determined one or more unmarked nodes. The processor 204 may be configured to determine one or more unmarked nodes in the retrieved FPG, based on the performed depth first search. The processor 204 may identify the one or more discarded features based on the determined one or more unmarked nodes. The discarded features may be one or more features from the plurality of features corresponding to the ML project (such as, the ML project 302) that may have been discarded. The features corresponding to the nodes marked in the FPG (such as, the FPG 400B) may be the features used to train the ML model of the ML project and the features corresponding to the nodes unmarked in the FPG may be the features that may not be used (or discarded) to train the ML model. With reference to FIG. 4B, it may be observed that the node corresponding to the feature "C" in the first layer of nodes 418 and the node corresponding to the feature "D_z" in the fourth layer of nodes 424 may be left unmarked by the backwards depth first search, as nodes corresponding the features "C" and "D_z" do not appear in the fifth layer of nodes 426 (i.e., the final data-frame snapshot). Hence, the feature "C" and the feature "D_z" may be discarded features. Thus is, all unmarked nodes of the initial data-frame in the FPG 400B may correspond to discarded features, in case backwards depth first search is used to traverse the FPG 400B. Similarly, all unmarked nodes of the final data-frame in the FPG 400B may correspond to discarded features, in case forward depth first search is used to traverse the FPG 400B. Control may pass to end.

Although the flowchart 700 is illustrated as discrete operations, such as 702, 704, 706, and 708. However, in certain embodiments, such discrete operations may be further divided into additional operations, combined into fewer operations, or eliminated, depending on the particular implementation without detracting from the essence of the disclosed embodiments.

It may be noted by the features may be ignored or discarded in many ways in the ML pipeline such as, explicitly by feature names or dynamically, through deletion or selection by constructing a new data-frame. Also, features may be renamed, a feature may be converted into multiple sub-features, or multiple features may be merged into one feature. Thus, static analysis of an ML pipeline may not be sufficient to capture discarded features, since the features may be deleted or selected dynamically. Also, only dynamic analysis may not capture explicit renaming. Thus, a combination of static and dynamic analysis may be necessary to suitably capture the discarded features of an ML project.

FIG. 8 is a diagram that illustrates a flowchart of an exemplary method to determine explicit feature mapping of an ML pipeline, in accordance with at least one embodiment described in the present disclosure. FIG. 8 is described in conjunction with elements from FIG. 1, FIG. 2, FIG. 3, FIG. 4A, FIG. 4B, FIG. 5, FIG. 6A, FIG. 6B, and FIG. 7. With reference to FIG. 8, there is shown a flowchart 800. The method illustrated in the flowchart 800 may start at block 802 and may be performed by any suitable system, apparatus, or device, such as by the example electronic device 102 of FIG. 1 or the processor 204 of FIG. 2. Although illustrated with discrete blocks, the steps and operations associated with one or more of the blocks of the flowchart 800 may be divided into additional blocks, combined into fewer blocks, or eliminated, depending on the particular implementation.

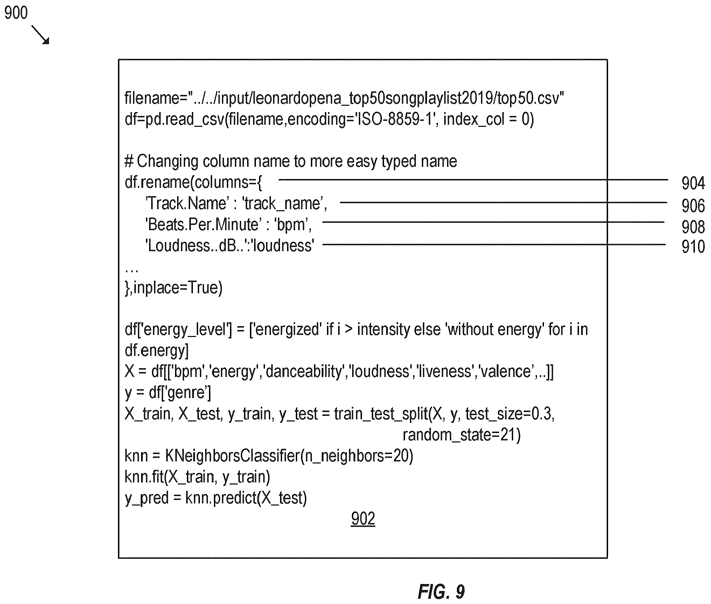

FIG. 9 is a diagram that illustrates an exemplary scenario of an exemplary ML pipeline corresponding to an exemplary ML project, in accordance with an embodiment of the disclosure. FIG. 9 is described in conjunction with elements from FIG. 1, FIG. 2, FIG. 3, FIG. 4A, FIG. 4B, FIG. 5, FIG. 6A, FIG. 6B, FIG, 7 and FIG. 8. With reference to FIG. 9, there is shown an exemplary scenario 900. The exemplary scenario 900 may include an exemplary ML pipeline 902. The ML pipeline 902 may include a plurality of statements such as, a statement 904, a statement 906, a statement 908, and a statement 910. The electronic device 102 or the processor 204 may process the ML pipeline 902 to determine explicit feature mappings of the ML pipeline 902, as described herein.

With reference to FIG. 8, at block 802, the abstract syntax tree (AST) of the atomized ML pipeline may be constructed. The processor 204 may be configured to construct abstract syntax tree (AST) of the atomized ML pipeline. The processor 204 may be atomize the ML pipeline 902 to determine an atomized ML pipeline (such as, the atomized ML pipeline 306). The processor 204 may construct the AST associated with the atomized ML pipeline 306. Once the AST of atomized ML pipeline 306 is determined, the processor 204 may store the constructed AST associated with the atomized ML pipeline 306, for example, in the memory 206. Details related to the construction of the AST of the atomized ML pipeline 306, for example, at 604 (in FIG. 6A)

At block 804, the constructed AST of the atomized ML pipeline (e.g., the atomized ML pipeline 306) may be traversed to identify the rename operation. The processor 204 may be configured to traverse the constructed AST of the atomized ML pipeline to identify the rename operation. As discussed, the AST of a given code may be the tree representation of the abstract syntactic framework of the code in formal language. The constructed AST of the atomized ML pipeline may not include every detail of the the atomized ML pipeline or syntax of the the atomized ML pipeline rather the AST may include only abstract syntax in formal language (such as, a "while" statement, an "if" statement, a "branching" statement, a "comparison" statement, an "assignment" statement, a variable name, and the like) of the the atomized ML pipeline. The constructed AST of the atomized ML pipeline may be traversed to identify the rename operation. The rename operation may be used to rename features. For example, with reference to FIGs. 4A and 4B, the third statement 408 may rename the feature "A*" to "A" and the feature "B*" to "B" by using the rename function. The constructed AST of the atomized ML pipeline may be traversed either from a selected node, such as a leaf node or a root node of the AST to identify the rename operation. For example, the AST may be traversed forwards from the root node to check for a rename application programming interface (API).

With reference to FIG. 9, the rename operation may be defined in the statement 904. Herein, the rename function may be called to rename features. In an example, an AST analysis for "python" programs such as, "LibCST" may be used to analyze the AST to identify the rename operation.

With reference to FIG. 8, at block 806, a parameter map associated with the identified rename operation may be determined. The processor 204 may be configured to determine the parameter map associated with the identified rename operation. The parameter map may map an initial name of the feature and a final name of the feature after the rename operation. It may be noted that new feature names may be very different from original feature names and may not be captured through any textual similarity metrices. Hence, the parameter map may be determined.

With reference to FIG. 9, the rename operation may be defined in the statement 904. Herein, the rename function is called to rename features. It may be observed from the statement 906, the statement 908, and the statement 910 that a feature named as "Track.Name" may be changed to "track_name", a feature named as "Beats.Per.Minute" may be changed to "bpm", and a feature named as "Loudness..dB" may be changed to "loudness". Thus, the parameter map may map "Track.Name" to "track_name", "Beats.Per.Minute" to "bpm", and "Loudness..dB" to "loudness".

With reference to FIG. 8, at block 808, a first mapping may be extracted between the plurality of features corresponding to the received ML project and a set of first features associated with the ML pipeline, based on the determined parameter map. Herein, the one or more discarded features may be identified further based on the extracted first mapping. The processor 204 may be configured to extract the first mapping between the plurality of features corresponding to the received ML project and the set of first features associated with the ML pipeline, based on the determined parameter map. The processor 204 may identify the one or more discarded features further based on the extracted first mapping. The extracted first mapping may be analysed to check whether any feature is not mapped. The features that are not mapped by the first mapping may be identified as the one or more discarded features.

In an embodiment, the set of first features may correspond to one or more features that may be renamed based on a user input from a user (such as, the user 112). In other words, the set of first features may be explicit features that may be renamed based on names provided by the user 112 to a rename function. Thus, the processor 204 may rename the set of first features based on the user input. For example, with reference to FIG. 9, it may be observed from the statement 906, the statement 908, and the statement 910 that the feature named as "Track.Name" may be changed to "track_name", the feature named as "Beats.Per.Minute" may be changed to "bpm", and the feature named as "Loudness..dB" may be changed to "loudness" based on user input associated with ML pipeline 902. Thus, such features may be the set of first features. Control may pass to end.

Although the flowchart 800 is illustrated as discrete operations, such as 802, 804, 806, and 808. However, in certain embodiments, such discrete operations may be further divided into additional operations, combined into fewer operations, or eliminated, depending on the particular implementation without detracting from the essence of the disclosed embodiments.

FIG. 10 is a diagram that illustrates a flowchart of an exemplary method to determine implicit feature mapping of an ML pipeline, in accordance with at least one embodiment described in the present disclosure. FIG. 10 is described in conjunction with elements from FIG. 1, FIG. 2, FIG. 3, FIG. 4A, FIG. 4B, FIG. 5, FIG. 6A, FIG. 6B, FIG. 7, FIG. 8, and FIG. 9. With reference to FIG. 10, there is shown a flowchart 1000. The method illustrated in the flowchart 1000 may start at block 1002 and may be performed by any suitable system, apparatus, or device, such as by the example electronic device 102 of FIG. 1 or the processor 204 of FIG. 2. Although illustrated with discrete blocks, the steps and operations associated with one or more of the blocks of the flowchart 1000 may be divided into additional blocks, combined into fewer blocks, or eliminated, depending on the particular implementation.

At block 1002, each of the one or more atomic steps corresponding to the ML pipeline may be traversed to track an update of a name associated with each of a set of second features associated with the ML pipeline. The processor 204 may be configured to traverse through each of the one or more atomic steps corresponding to the received ML pipeline to track the update of the name associated with each of the set of second features associated with the ML pipeline. Herein, the set of second features may be different from the set of first features that may be renamed based on the rename operation. The set of second features may not be explicitly renamed based on a user input from a user, such as, the user 112. Since, the renaming of the second set of features may not be based on a user input, each atomic step may be required to be tracked to monitor the update of the name associated with each of the set of second features associated with the received ML pipeline such as the received ML pipeline 302A.

In an embodiment, the set of second features may correspond to one or more features that may be renamed based on a set of predefined rules. It may be noted that the set of second features may be implicit features. Herein, the implicit features may not be renamed based on a user input from a user, such as, the user 112. Rather, the user may pass the set of second features to an application programming interface (API) such as a "get_dummies" function of "pandas" library of "python" programming language. The user may not pass the new name to be assigned to the renamed feature, instead the API may assign the new name to the renamed feature. In an example, the API may use an old name and may add a suffix such as, a numeral (for example, 1, 2 and so on), an alphabet, and the like. Details of renaming of the set of second features are further provided, for example, in FIG. 11.

At block 1004, a second mapping may be extracted between the plurality of features corresponding to the received ML project and the set of second features. The processor 204 may be configured to extract the second mapping between the plurality of features corresponding to the received ML project and the set of second features. Herein, the second mapping may be determined between the plurality of features corresponding to the received ML project and the set of second features based on the tracking the update of the name associated with each of the set of second features associated with the ML pipeline, such as the ML pipeline 302A. The second mapping may be also called as an implicit feature mapping. In an example, a feature "B" of the plurality of features corresponding to the received ML project may be converted to a feature "B1" and a feature "B2" by using the API. Herein, the feature "B" may be mapped to the feature "B1" and the feature "B2".

The second mapping may be one of: a one-to-one mapping, a one-to-many mapping, a many-to-one mapping, or a many-to-many mapping. For the one-to-one mapping, the one-to-many mapping, and the many-to-one mapping, input and output features may be directly mapped. In other words, the plurality of features corresponding to the received ML project and the set of second features may be directly mapped for the one-to-one mapping, the one-to-many mapping, and the many-to-one mapping. For many-to-many mappings, two basic heuristics may be used. In the first heuristic, features whose feature names remain the same may be directly mapped. Further, in the second heuristic, features may be mapped in case an original feature name is a prefix of the new feature name or a value of the original feature is the new feature name.

In an embodiment, the plurality of features may correspond to an initial data-frame of the captured one or more data-frame snapshots and the set of second features corresponds to a final data-frame of the captured one or more data-frame snapshots. In other words, the plurality of features may correspond to the initial data-frame of the captured one or more data-frame snapshots, such as the captured data-frame snapshots 314, of the ML pipeline (such as, the ML pipeline 302A). It may be noted the set of second features may be obtained by multiple transformations of one or more features of the plurality of features. Thus, the set of second features may correspond to the final data-frame of the captured one or more data-frame snapshots. That is, the set of second features may be the final features. For example, if a feature "A" corresponding to the initial data-frame of the captured one or more data-frame snapshots is first renamed to "A_1" and then transformed to a feature "A_11" and a feature "A_12", then the feature "A" may be included in the plurality of features and the features "A_11" and "A_12" may be included in the set of second features. Herein, the second mapping may map the feature "A" to the feature "A_11" and the feature "A_12". An exemplary scenario of the extraction of the second mapping is described, for example, in FIG. 11.

At block 1006, the one or more discarded features may be identified further based on the extracted second mapping. The processor 204 may be configured to identify the one or more discarded features further based on the extracted second mapping. Based on the second mapping, the one or more discarded features may be identified by checking features that are not mapped. Thus, the features that may be left out from the second mapping may be identified as the discarded features. In an embodiment, the one or more discarded features may include a set of features that may not be included in the first mapping and/or the second mapping. Control may pass to end.

Although the flowchart 1000 is illustrated as discrete operations, such as 1002, 1004, and 1006. However, in certain embodiments, such discrete operations may be further divided into additional operations, combined into fewer operations, or eliminated, depending on the particular implementation without detracting from the essence of the disclosed embodiments.

FIG. 11 is a diagram that illustrates an exemplary scenario for extraction of second mappings, in accordance with at least one embodiment described in the present disclosure. FIG. 11 is described in conjunction with elements from FIG. 1, FIG. 2, FIG. 3, FIG. 4A, FIG. 4B, FIG. 5, FIG. 6A, FIG. 6B, FIG. 7, FIG. 8, FIG. 9, and FIG. 10. With reference to FIG. 11, there is shown an exemplary scenario 1100. The scenario 1100 may include an extracted second mapping 1102, an extracted second mapping 1104, an extracted second mapping 1106, and an extracted second mapping 1108. The electronic device 102 of FIG. 1 or the processor 204 of FIG. 2 may extract the second mapping 1102, the second mapping 1104, the second mapping 1106, and the second mapping 1108, as described herein.

The second mapping 1102 may be created by using a "LabelEncoder" function that may map features in scenarios where feature names remain the same. For example, in FIG. 11, it may be observed that the name of a feature "A" remains unchanged. The second mapping 1102 may be the one-to-one mapping.

The second mapping 1104 may map a feature "A" to a feature "A1" and a feature "A2". It may be observed that the feature "A" may be split into two columns. A first column may be renamed as "A1" and a second column may be renamed as "A2" by calling a "get_dummies" function. The second mapping 1104 may be the one-to-many mapping.

Similarly, the second mapping 1106 may map a feature "B" to a feature "B1" and a feature "B2". Herein, the feature "B" may be split into two columns. A first column may be renamed as "B1" and a second column may be renamed as "B2" by calling the "get_dummies" function. The second mapping 1106 may be the one-to-many mapping.

The second mapping 1108 may map the feature "A" and the feature "B" to the feature "A" through a feature aggregation function. Herein, the second mapping 1108 may be the many-to-one mapping.

It should be noted that the scenario 1100 of FIG. 11 is for exemplary purposes and should not be construed as limiting the scope of the disclosure.

Traditional methods for ML pipeline generation may require significant manual effort and time of expert users, such as, data scientists. Human data-scientists may often discard several features of an input dataset (i.e., a data-frame of an ML project). Recently, certain techniques for automatic generation of ML pipelines for datasets have been developed.

Typically, the deleted features may constitute a source of noise for learning for the automatic generation of the ML pipeline. However, there may be multiple reasons and mechanics to prune features. Thus, simple analyses or heuristics may not be adequate to identify the discarded features so as to improve the automatic generation of ML pipelines.

The electronic device 102 of the present disclosure may automatically denoise an ML project. The disclosed electronic device 102 may employ a dynamic dataflow analysis of ML pipelines to accurately identify data features that may not be used or may be effectively discarded by an ML pipeline of the ML project. The disclosed electronic device 102 may systematically track the execution of the ML pipeline operation-by-operation and may record addition, removal, or modification of data features in a data-frame, and may thereby clearly identify the features that may be used by the ML pipeline. Further, the disclosed electronic device 102 may label the ML pipeline of the ML project with discarded features to obtain a cleaner ML pipeline and data-frame, which may be used for automatic generation of ML pipelines with a higher accuracy. The accurate identification of discarded features may also result in generation of higher quality meta-learning models (such as, the meta-learning model 102A) from the ML project, based on the obtained cleaner ML pipelines and data-frames.

An exemplary experimental setup for the disclosure is presented in Table 1, as follows:

Table 1: Exemplary experimental setup of the disclosure

| Dataset and Experimental setup | Values |
| --- | --- |
| Number of ML pipelines in the ML corpus | 1,094 |
| Number of Datasets | 208 |
| Number of components in a search space | 5 |
| Meta-learning model used | Logistic regression |
| Evaluation strategy | 4-fold cross validation |
| Evaluation metric | F1 Macro |

For example, with reference to Table 1, the experimental setup may include 1094 ML pipelines and 208 datasets in an ML corpus database (e.g., the database 108). The meta-learning model 102A of the experimental setup may correspond to a logistic regression model and there may be 5 components in the search space associated with the logistic regression model. To validate the training of the meta-learning model 102A a 4-fold cross validation may be used based on an F1 Macro evaluation metric. It should be noted that data provided in Table 1 may merely be taken as experimental data and may not be construed as limiting the present disclosure.

An exemplary experiment data of results on noise present in the ML pipelines in the ML corpus is presented in Table 2, as follows:

Table 2: Exemplary experimental data of noise present in the ML pipelines in the corpus

| One or discarded features | Percentage of ML pipelines |
| --- | --- |
| One or more features discarded | 60% |
| All features used | 40% |

From Table 2, it may be observed that out of the total of 1,094 ML pipelines, for 60 percentage of the ML pipelines, one or more features may be discarded. For 40% percentage of the ML pipelines, all features of the plurality of features may be used. Based on experiments, it was found that macro F1 score of a skeleton predictor improved by 5% on an average with a maximum improvement for 9% for text processing components by including the one or more discarded features in the training of the meta-learning model 102A. Therefore, the disclosed electronic device 102 may provide a significant improvement in the existing technology space of machine learning including, but not limited to, training of meta-learning models. The significant improvement may be provided based on an efficient identification of discarded features associated with an ML project and a use of relevant features from the identified discarded features to train the meta-learning models.

It should be noted that data provided in Table 2 may merely be taken as experimental data and may not be construed as limiting the present disclosure.

Various embodiments of the disclosure may provide one or more non-transitory computer-readable storage media configured to store instructions that, in response to being executed, cause a system (such as, the example electronic device 102) to perform operations. The operations may include receiving a machine learning (ML) project including a data-frame and an ML pipeline that may include a plurality of code statements associated with a plurality of features corresponding to the received ML project. The operations may further include determining one or more atomic steps corresponding to the ML pipeline to determine an atomized ML pipeline. The operations may further include instrumenting the atomized ML pipeline to determine an instrumented ML pipeline including one or more operations corresponding to the received ML project. The operations may further include executing the instrumented ML pipeline to capture one or more data-frame snapshots based on each of the one or more operations. The operations may further include constructing a feature provenance graph (FPG) based on the ML pipeline and the captured one or more data-frame snapshots. The operations may further include identifying one or more discarded features, from the plurality of features corresponding to the received ML project, based on the constructed FPG.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the system and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1.   A method, executed by a processor, comprising:

receiving an ML project including a data-frame and an ML pipeline, the ML pipeline includes a plurality of code statements associated with a plurality of features corresponding to an ML project;
determining one or more atomic steps corresponding to the ML pipeline to determine an atomized ML pipeline;
instrumenting the atomized ML pipeline to determine an instrumented ML pipeline including one or more operations corresponding to the received ML project;
executing the instrumented ML pipeline to capture one or more data-frame snapshots based on each of the one or more operations;

constructing a feature provenance graph (FPG) based on the ML pipeline and the captured one or more data-frame snapshots; and

identifying one or more discarded features, from the plurality of features corresponding to the received ML project, based on the constructed FPG.

2. The method according to claim 1, wherein the determination of the one or more atomic steps corresponding to the ML pipeline is based on an application of a source-code lifting technique on the plurality of code statements.

3. The method according to claim 1, wherein the instrumentation of the atomized ML pipeline is based on an application of a method call injection technique on the atomized ML pipeline.

4. The method according to claim 1, wherein each of the captured one or more data-frame snapshots comprises at least one of: a line number, an input and an output of each variable, and a set of feature names associated with a data-frame type.

5. The method according to claim 1, further comprising:

initializing the feature provenance graph (FPG) as a directed acyclic graph including one node for each feature associated with the captured one or more data-frame snapshots;

retrieving an abstract syntax tree (AST) associated with the atomized ML pipeline;

selecting a first operation of the one or more operations to analyze a data-frame snapshot of the captured one or more data-frame snapshots, wherein

the data-frame snapshot corresponds to the selected first operation and includes input information and output information;

adding a layer of nodes in the FPG for each feature associated with the output information of the data-frame snapshot; and

adding a directed edge in the FPG from a first node associated with the input information to a second node associated with the output information, based on a correspondence between a first name of a first feature associated with the first node and a second name of a second feature associated with the second node.

6. The method according to claim 5, further comprising:

identifying, based on the retrieved AST, one or more features and an operation name associated with the selected first operation;

determining whether the operation name corresponds to a delete operation;

adding a null successor in the FPG for each node of the layer of nodes associated with the input information of the data-frame snapshot, based on the determination that the operation name corresponds to the delete operation;

determining whether the operation name corresponds to a rename operation;

adding a directed edge in the FPG from a node associated with the input information of the data-frame snapshot to a corresponding re-named successor node associated with the output information of the data-frame snapshot, based on the determination that the operation name corresponds to the rename operation; and

adding a directed edge in the FPG from each node of the layer of nodes associated with the input information of the data-frame snapshot to a corresponding successor node associated with the output information of the data-frame snapshot, based on the determination that the operation name is other than the rename operation or the delete operation.

7. The method according to claim 1, further comprising:

retrieving the constructed feature provenance graph (FPG);

selecting a node from a data-frame snapshot in the retrieved FPG;

performing a depth first search of the retrieved FPG from the selected node by marking each visited node in the retrieved FPG; and

determining one or more unmarked nodes in the retrieved FPG, based on the performed depth first search, wherein

the one or more discarded features are identified based on the determined one or more unmarked nodes.

8. The method according to claim 7, wherein the depth first search corresponds to at least one of: a forward depth first search or a backward depth first search.

9. The method according to claim 1, further comprising:

constructing an abstract syntax tree (AST) of the atomized ML pipeline;
traversing the constructed AST of the atomized ML pipeline to identify a rename operation;
determining a parameter map associated with the identified rename operation; and
extracting a first mapping between the plurality of features corresponding to the received ML project and a set of first features associated with the ML pipeline, based on the determined parameter map, wherein
the one or more discarded features are identified further based on the extracted first mapping.

10. The method according to claim 9, wherein the set of first features correspond to one or more features that are renamed based on a user input.

11. The method according to claim 1, further comprising:

traversing through each of the one or more atomic steps corresponding to the ML pipeline to track an update of a name associated with each of a set of second features associated with the ML pipeline; and
extracting a second mapping between the plurality of features corresponding to the received ML project and the set of second features, wherein
the one or more discarded features are identified further based on the extracted second mapping.

12. The method according to claim 11, wherein the set of second features correspond to one or more features that are renamed based on a set of predefined rules.

13. The method according to claim 11, wherein the plurality of features corresponds to an initial data-frame of the captured one or more data-frame snapshots and the set of second features corresponds to a final data-frame of the captured one or more data-frame snapshots.

14. The method according to claim 1, further comprising:

determining one or more relevant features, from the plurality of features corresponding to the received ML project, based on the identified one or more discarded features; and
training a meta-learning model associated with the ML project based on the determined one or more relevant features.

15. One or more non-transitory computer-readable storage media configured to store instructions that, in response to being executed, cause an electronic device to perform operations, the operations comprising:

receiving an ML project including a data-frame and an ML pipeline, the ML pipeline includes a plurality of code statements associated with a plurality of features corresponding to an ML project;
determining one or more atomic steps corresponding to the ML pipeline to determine an atomized ML pipeline;
instrumenting the atomized ML pipeline to determine an instrumented ML pipeline including one or more operations corresponding to the received ML project;
executing the instrumented ML pipeline to capture one or more data-frame snapshots based on each of the one or more operations;
constructing a feature provenance graph (FPG) based on the ML pipeline and the captured one or more data-frame snapshots; and
identifying one or more discarded features, from the plurality of features corresponding to the received ML project, based on the constructed FPG.

16. The one or more non-transitory computer-readable storage media according to claim 15, wherein the operations further comprise:

initializing the feature provenance graph (FPG) as a directed acyclic graph including one node for each feature associated with the captured one or more data-frame snapshots;
retrieving an abstract syntax tree (AST) associated with the atomized ML pipeline;

selecting a first operation of the one or more operations to analyze a data-frame snapshot of the captured one or more data-frame snapshots, wherein

the data-frame snapshot corresponds to the selected first operation and includes input information and output information;

adding a layer of nodes in the FPG for each feature associated with the output information of the data-frame snapshot; and

adding a directed edge in the FPG from a first node associated with the input information to a second node associated with the output information, based on a correspondence between a first name of a first feature associated with the first node and a second name of a second feature associated with the second node.

17. The one or more non-transitory computer-readable storage media according to claim 16, wherein the operations further comprise:

identifying, based on the retrieved AST, one or more features and an operation name associated with the selected first operation;

determining whether the operation name corresponds to a delete operation;

adding a null successor in the FPG for each node of the layer of nodes associated with the input information of the data-frame snapshot, based on the determination that the operation name corresponds to the delete operation;

determining whether the operation name corresponds to a rename operation;

adding a directed edge in the FPG from a node associated with the input information of the data-frame snapshot to a corresponding re-named successor node associated with the output information of the data-frame snapshot, based on the determination that the operation name corresponds to the rename operation; and

adding a directed edge in the FPG from each node of the layer of nodes associated with the input information of the data-frame snapshot to a corresponding successor node associated with the output information of the data-frame snapshot, based on the determination that the operation name is other than the rename operation or the delete operation.

18. The one or more non-transitory computer-readable storage media according to claim 15, wherein the operations further comprise:

retrieving the constructed feature provenance graph (FPG);

selecting a node from a data-frame snapshot in the retrieved FPG;

performing a depth first search of the retrieved FPG from the selected node by marking each visited node in the retrieved FPG; and

determining one or more unmarked nodes in the retrieved FPG, based on the performed depth first search, wherein

the one or more discarded features are identified based on the determined one or more unmarked nodes.

19. The one or more non-transitory computer-readable storage media according to claim 15, wherein the operations further comprise:

determining one or more relevant features, from the plurality of features corresponding to the received ML project, based on the identified one or more discarded features; and

training a meta-learning model associated with the ML project based on the determined one or more relevant features.

20. An electronic device, comprising:

a memory storing instructions; and

a processor, coupled to the memory, that executes the stored instructions to perform a process comprising:

receiving an ML project including a data-frame and an ML pipeline, the ML pipeline includes a plurality of code statements associated with a plurality of features corresponding to an ML project;

determining one or more atomic steps corresponding to the ML pipeline to determine an atomized ML pipeline;

instrumenting the atomized ML pipeline to determine an instrumented ML pipeline including one or more operations corresponding to the received ML project;

executing the instrumented ML pipeline to capture one or more data-frame snapshots based on each of the one or more operations;

constructing a feature provenance graph (FPG) based on the ML pipeline and the captured one or more data-frame snapshots; and

identifying one or more discarded features, from the plurality of features corresponding to the received ML project, based on the constructed FPG.

FIG. 1

EP 4 145 357 A1

200

Communication Network 110

System 202

Electronic Device 102

Memory 206

Meta-learning Model 102A

I/O Device 208

Display Device 208A

Network Interface 210

Processor 204

*FIG. 2*

*FIG. 3*

400A

```
data = [A*,B*,C,D,E,]                                          —— 404
data = data.drop([C], axis=1)                                 —— 406
data.rename(columns={A*':A',B*':B',},inplace=True) —— 408
data = pd.get_dummies(data, columns=[A,D])           —— 410
X = data[A_a, A_b, B, D_x, D_y]                           —— 412
y = data[E]                                                   —— 414
le = LogisticRegression().fit(X,y)                        —— 416
```

<u>402</u>

*FIG. 4A*

FIG. 4B

500

Receive ML Project including data frame and ML pipeline which includes plurality of code statements associated with plurality of features corresponding to ML project 502

↓

Determine one or more atomic steps corresponding to ML pipeline to determine atomized ML pipeline 504

↓

Instrument atomized ML pipeline to determine instrumented ML pipeline including one or more operations corresponding to recieved ML project 506

↓

Execute instrumented ML pipeline to capture one or more data-frame snapshots based on each of one or more operations 508

↓

Construct feature provenance graph (FPG) based on ML pipeline and captured one or more data-frame snapshots 510

↓

Identify one or more discarded features, from plurality of features corresponding to received ML project, based on constructed FPG 512

*FIG. 5*

600

Initialize feature provenance graph (FPG) as directed acyclic graph including one node for each feature associated with captured one or more data-frame snapshots 602

Retrieve abstract syntax tree (AST) associated with atomized ML pipeline 604

Select first operation of one or more operations to analyze data-frame snapshot of captured one or more data-frame snapshots, wherein data-frame snapshot corresponds to selected first operation and includes input information and output information 606

Add layer of nodes in FPG for each feature associated with output information of data-frame snapshot 608

Add directed edge in FPG from first node associated with input information to second node associated with output information, based on correspondence between first name of first feature associated with first node and second name of second feature associated with second node 610

Identify, based on retrieved AST, one or more features and operation name associated with selected first operation 612

A

*FIG. 6A*

600

A

Determine whether operation name corresponds to delete operation 614

Add null successor in FPG for each node of layer of nodes associated with input information of data-frame snapshot, based on determination that operation name corresponds to delete operation 616

Determine whether operation name corresponds to rename operation 618

Add directed edge in FPG from node associated with input information of data-frame snapshot to corresponding re-named successor node associated with output information of data-frame snapshot, based on determination that operation name corresponds to rename operation 620

Add directed edge in FPG from each node of layer of nodes associated with input information of data-frame snapshot to corresponding successor node associated with output information of data-frame snapshot, based on determination that operation name is other than rename operation or delete operation 622

*FIG. 6B*

700

Retrieve constructed feature provenance graph (FPG) 702

Select node from data-frame snapshot in retrieved FPG 704

Perform depth first search of retrieved FPG from selected node by marking each visited node in retrieved FPG 706

Determine one or more unmarked nodes in retrieved FPG, based on performed depth first search, wherein one or more discarded features are identified based on determined one or more unmarked nodes 708

*FIG. 7*

800

Construct abstract syntax tree (AST) of atomized ML pipeline 802

Traverse constructed AST of atomized ML pipeline to identify rename operation 804

Determine parameter map associated with identified rename operation 806

Extract first mapping between plurality of features corresponding to received ML project and set of first features associated with ML pipeline, based on determined parameter map, wherein one or more discarded features are identified further based on extracted first mapping 808

FIG. 8

900

```
filename="../../input/leonardopena_top50songplaylist2019/top50.csv"
df=pd.read_csv(filename,encoding='ISO-8859-1', index_col = 0)

# Changing column name to more easy typed name
df.rename(columns={
    'Track.Name' : 'track_name',
    'Beats.Per.Minute' : 'bpm',
    'Loudness..dB..':'loudness'
...
},inplace=True)

df['energy_level'] = ['energized' if i > intensity else 'without energy' for i in
df.energy]
X = df[['bpm','energy','danceability','loudness','liveness','valence',..]]
y = df['genre']
X_train, X_test, y_train, y_test = train_test_split(X, y, test_size=0.3,
                                                    random_state=21)
knn = KNeighborsClassifier(n_neighbors=20)
knn.fit(X_train, y_train)
y_pred = knn.predict(X_test)
```
                                    902

904
906
908
910

*FIG. 9*

1000

Traverse through each of one or more atomic steps corresponding to ML pipeline to track update of name associated with each of set of second features associated with ML pipeline 1002

Extract second mapping between plurality of features corresponding to received ML project and set of second features 1004

Identify one or more discarded features based on extracted second mapping 1006

*FIG. 10*

FIG. 11

Europäisches
Patentamt

European
Patent Office

Office européen
des brevets

# EUROPEAN SEARCH REPORT

**Application Number**

EP 22 18 8259

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/216905 A1 (FLORATOU AVRILIA [US] ET AL) 15 July 2021 (2021-07-15) * Paragraphs [0007; 0037-0041; 0045; 0046; 0048; 0052; 0056; 0081]; claims 1, 2, 5; figures 2, 6, 13 * | 1-20 | INV. G06N5/02 G06N20/20 G06N5/00 G06N5/04 G06F8/40 |
| X | SOUZA RENAN ET AL: "Provenance Data in the Machine Learning Lifecycle in Computational Science and Engineering", 2019 IEEE/ACM WORKFLOWS IN SUPPORT OF LARGE-SCALE SCIENCE (WORKS), IEEE, 17 November 2019 (2019-11-17), pages 1-10, XP033681504, DOI: 10.1109/WORKS49585.2019.00006 [retrieved on 2019-12-26] * Section IV and V-A.; figure 2 * | 1-20 | G06F8/41 G06F8/72 |
| A | CN 109 426 722 B (SHENZHEN SOURCEBRELLA NEW TECH CO LTD) 29 June 2021 (2021-06-29) * Section Detailed ways * | 7,8 | |

**TECHNICAL FIELDS SEARCHED (IPC)**

G06N
G06F

The present search report has been drawn up for all claims

| Place of search | Date of completion of the search | Examiner |
|---|---|---|
| The Hague | 16 December 2022 | Tidriri, Khaoula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 18 8259

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2022

| Patent document cited in search report | Publication date | Patent family member(s) | Publication date |
|---|---|---|---|
| US 2021216905 A1 | 15-07-2021 | NONE | |
| CN 109426722 B | 29-06-2021 | CN 109426614 A | 05-03-2019 |
| | | CN 109426615 A | 05-03-2019 |
| | | CN 109426722 A | 05-03-2019 |
| | | CN 109426723 A | 05-03-2019 |
| | | US 2019108003 A1 | 11-04-2019 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63260909